# EUROPEAN PATENT APPLICATION

(11) **EP 4 804 415 A1**
(43) Date of publication of application: **09.09.2026**
(21) Application number: 24893375.6
(22) Date of filing: 18.11.2024
(51) Int. Cl.: H04B 1/715

(54) **COMMUNICATION METHOD AND APPARATUS**

(30) Priority: 25.11.2023 CN 202311597712; 18.04.2024 CN 202410473123
(71) Applicant: Huawei Technologies Co., Ltd., Shenzhen, Guangdong 518129 (CN)
(72) Inventor: YU, Jian, Shenzhen, Guangdong 518129 (CN); QIAN, Bin, Shenzhen, Guangdong 518129 (CN); CHITRAKAR, Rojan, Shenzhen, Guangdong 518129 (CN); HUANG, Lei, Shenzhen, Guangdong 518129 (CN); YANG, Xun, Shenzhen, Guangdong 518129 (CN); LIU, Peng, Shenzhen, Guangdong 518129 (CN)
(74) Representative: Maiwald GmbH
(86) International application number: PCT/CN2024/132582
(87) International publication number: WO 2025/108218

(57) **Abstract**

This application provides a communication method and apparatus, which are mainly applied to a case in which narrowband transmission and WLAN transmission coexist in a frequency hopping scenario. Whether to perform listen-before-talk LBT is determined based on a transmission time-related parameter corresponding to a first channel for transmitting a narrowband signal. The transmission time-related parameter may include a first transmission time at a channel granularity or a first duty cycle. In the frequency hopping scenario, a dwell time of the narrowband signal on different channels becomes shorter, and interference to WLAN transmission is reduced. In this way, coexistence between narrowband transmission and WLAN transmission can be achieved while reducing a quantity of times that a device with a narrowband transmission capability performs LBT, thereby reducing a delay of narrowband signal transmission and improving a throughput of the narrowband signal transmission.

## Description

This application claims priorities to Chinese Patent Application No. 202311597712.1, filed with the China National Intellectual Property Administration on November 25, 2023 and entitled "COMMUNICATION METHOD AND APPARATUS", and to Chinese Patent Application No. 202410473123.0, filed with the China National Intellectual Property Administration on April 18, 2024 and entitled "COMMUNICATION METHOD AND APPARATUS", both of which are incorporated herein by reference in their entireties.

### TECHNICAL FIELD

This application relates to the communication field, and more specifically, to a communication method and apparatus.

### BACKGROUND

A wireless local area network (wireless local area network, WLAN) technology is a wireless local area network technology established by the wireless fidelity (wireless fidelity, Wi-Fi) alliance based on the Institute of Electrical and Electronics Engineers (Institute of Electrical and Electronics Engineers, IEEE) 802.11 standards. In the 802.11 standards, it is defined that transmission bandwidths of different channels corresponding to WLAN transmission may be 20 megahertz (MHz), 40 MHz, 80 MHz, 160 MHz, 320 MHz, and the like.

Compared with a transmission bandwidth of WLAN transmission defined in the 802.11 standards, transmission bandwidths of Bluetooth (Bluetooth) transmission and ultra-wideband (ultra-wideband, UWB) transmission may be 1 MHz, 2 MHz, or 4 MHz. Therefore, the Bluetooth transmission and the ultra-wideband transmission may also be referred to as narrowband (narrowband, NB) transmission.

Currently, candidate spectrums for narrowband transmission include unlicensed national information infrastructure 3 (unlicensed national information infrastructure, U-NII 3) and U-NII 5. Candidate spectrums for narrowband transmission overlap with those for conventional WLAN transmission. Therefore, interference exists between the narrowband transmission and the conventional WLAN transmission.

A frequency hopping technology can reduce interference from the narrowband transmission to the conventional WLAN transmission. However, currently, there is a lack of methods that can both reduce interference from the narrowband transmission to the WLAN transmission and reduce a delay of the narrowband transmission in a frequency hopping scenario. Therefore, in a frequency hopping scenario, how to achieve coexistence between the narrowband transmission and the WLAN transmission while reducing a delay of the narrowband transmission is an urgent problem to be resolved.

### SUMMARY

According to a first aspect, a communication method is provided. The method includes: obtaining a first transmission time, where the first transmission time is related to a transmission time of at least one of N first channels, the N first channels are used to transmit a narrowband signal through frequency hopping, and N is a positive integer greater than or equal to 2; and enabling listen-before-talk LBT if the first transmission time is greater than or equal to a first threshold; or skipping enabling the LBT if the first transmission time is less than the first threshold.

In the foregoing technical solution, in a frequency hopping scenario, a dwell time of the narrowband signal on different channels becomes shorter, and interference to WLAN transmission is reduced. Compared with continuing to use a total transmission time for sending the narrowband signal in a transmission period to determine whether to perform the LBT, that is, use a transmission time at a device-level granularity to determine whether to perform the LBT, the first transmission time in the solution of this application is related to a transmission time of at least one of the N first channels. In this way, coexistence of narrowband transmission and WLAN transmission can be achieved, and a quantity of times that a first device having a narrowband communication capability performs the LBT is reduced without increasing interference, thereby reducing a delay of narrowband signal transmission and increasing a throughput of narrowband signal transmission.

With reference to the first aspect, in some implementations of the first aspect, the method further includes: obtaining N second transmission times corresponding to the N first channels, where an n^{th} second transmission time includes a transmission time of the narrowband signal on an n^{th} first channel, the first transmission time is an average value of the N second transmission times, 1≤n≤N, and n is a positive integer.

With reference to the first aspect, in some implementations of the first aspect, enabling the listen-before-talk LBT if the first transmission time is greater than or equal to the first threshold includes: enabling the LBT for the N first channels if the first transmission time is greater than or equal to the first threshold.

In this way, in a frequency hopping scenario, because the first transmission time indicates an averaging status of the N second transmission times of the N first channels, whether the LBT is performed for the N first channels may be determined only by comparing the first transmission time with the first threshold. In this manner, coexistence of narrowband transmission and WLAN transmission can be achieved, and a quantity of times that a first device having a narrowband communication capability performs the LBT is reduced without increasing interference, thereby reducing a delay of narrowband signal transmission. In addition, the first transmission time may be an average value of transmission times corresponding to the N first channels. A unified determining manner can reduce calculation complexity, and is easier to implement.

With reference to the first aspect, in some implementations of the first aspect, the first transmission time includes a transmission time of the narrowband signal on an n^{th} first channel when a first device performs frequency hopping to the n^{th} first channel, 1≤n≤N, and n is a positive integer.

With reference to the first aspect, in some implementations of the first aspect, enabling the listen-before-talk LBT if the first transmission time is greater than or equal to the first threshold includes: enabling the LBT for the n^{th} first channel if the first transmission time is greater than or equal to the first threshold.

In this way, in a frequency hopping scenario, whether to perform the LBT for the first channel is determined based on a transmission time of any one of the N first channels for transmitting a narrowband signal. Coexistence of narrowband transmission and WLAN transmission is achieved, and a quantity of times that a first device having a narrowband communication capability performs the LBT is reduced without increasing interference, so that a throughput of narrowband signal transmission on the first channel is increased in a more targeted and accurate manner, and a delay of narrowband signal transmission on the first channel is reduced.

With reference to the first aspect, in some implementations of the first aspect, a value of a bandwidth corresponding to each of the first channels is one of 20 MHz, 40 MHz, 80 MHz, 160 MHz, 240 MHz, 320 MHz, 480 MHz, or 640 MHz.

With reference to the first aspect, in some implementations of the first aspect, the method further includes: obtaining a first BSS operation bandwidth corresponding to a basic service set BSS in which a first device is located. The first transmission time includes a transmission time of the narrowband signal on some or all of the first channels corresponding to the first BSS operation bandwidth in the N first channels.

With reference to the first aspect, in some implementations of the first aspect, enabling the listen-before-talk LBT if the first transmission time is greater than or equal to the first threshold includes: enabling the LBT for the some or all of the first channels if the first transmission time is greater than or equal to the first threshold.

In this way, in a frequency hopping scenario, when the first device can sense a first BSS operation bandwidth of a BSS in which the first device is located, the transmission time for transmitting the narrowband signal on the some or all of the first channels corresponding to the first BSS operation bandwidth is compared with the first threshold, to determine whether to enable the LBT. In this way, interference from narrowband signal transmission to the BSS can be determined in a more targeted manner. Consequently, coexistence of narrowband transmission and WLAN transmission is achieved, and a quantity of times that a first device having a narrowband communication capability performs the LBT is reduced without increasing interference, so that a throughput of narrowband signal transmission on a channel on which frequency domain resources overlap is increased more accurately, and a delay of narrowband signal transmission is reduced.

With reference to the first aspect, in some implementations of the first aspect, the method further includes: obtaining an n^{th} second BSS operation bandwidth corresponding to an n^{th} first channel, where 1≤n≤N, and n is a positive integer; and obtaining the first transmission time includes: obtaining, based on the n^{th} second BSS operation bandwidth, an n^{th} first transmission time corresponding to transmission of the narrowband signal on the n^{th} first channel.

With reference to the first aspect, in some implementations of the first aspect, enabling the listen-before-talk LBT if the first transmission time is greater than or equal to the first threshold includes: enabling the LBT for the n^{th} first channel if the n^{th} first transmission time is greater than or equal to the first threshold.

In this way, in a frequency hopping scenario, BSS operation bandwidths corresponding to different BSSs of different first channels are sensed, and different transmission times of the different first channels are compared with the first threshold, to determine whether to enable the LBT. In this way, interference that may be caused by narrowband signal transmission to different BSSs in WLAN transmission can be more accurately learned in advance across an entire frequency band. Consequently, coexistence of narrowband transmission and WLAN transmission is achieved, and a quantity of times that a first device having a narrowband communication capability performs the LBT is reduced without increasing interference, so that a throughput of narrowband signal transmission is further comprehensively increased in a more accurate and targeted manner, and a delay of narrowband signal transmission is reduced.

With reference to the first aspect, in some implementations of the first aspect, the first transmission time is related to a transmission time for transmitting the narrowband signal by the first device, a bandwidth of the first channel, and a total bandwidth for transmitting the narrowband signal.

In this way, when probabilities of narrowband signal frequency hopping across different channels are approximately the same, calculation complexity can be further reduced, and a delay of narrowband signal transmission can be reduced.

With reference to the first aspect, in some implementations of the first aspect, the method further includes: obtaining a first duty cycle based on the first transmission time, where the first duty cycle indicates a proportion of the first transmission time in a transmission period; and enabling the listen-before-talk LBT if the first transmission time is greater than or equal to the first threshold; or skipping enabling the LBT if the first transmission time is less than the first threshold includes: enabling the LBT if the first duty cycle is greater than or equal to a second threshold; or skipping enabling the LBT if the first duty cycle is less than the second threshold.

With reference to the first aspect, in some implementations of the first aspect, a type of the transmission period includes any one of the following: a ranging round, a sensing round, a total interval applied to a ranging scenario, a total interval applied to a sensing scenario, a duration of a ranging block, a duration of a sensing block, or a duration of a hyper block. The total interval applied to the ranging scenario includes the ranging round and a non-ranging round, and the total interval applied to the sensing scenario includes the sensing round and the non-sensing round. The duration of the ranging block includes a ranging round of a first user and a non-ranging round of the first user, and the duration of the sensing block includes a sensing round of the first user and a non-sensing round of the first user. The duration of the hyper block includes a duration of one or more ranging blocks, or the duration of the hyper block includes a duration of one or more sensing blocks.

With reference to the first aspect, in some implementations of the first aspect, transmission periods of different types correspond to first thresholds of different scales, or the transmission periods of different types correspond to second thresholds of different scales.

In this way, transmission periods of different types correspond to first thresholds of different scales or second thresholds of different scales, so that flexibility of determining whether to perform the LBT can be improved.

With reference to the first aspect, in some implementations of the first aspect, a first transmission period corresponds to a first threshold of a first scale, a second transmission period corresponds to a first threshold of a second scale, and if a duration of the first transmission period is less than a duration of the second transmission period, the first threshold of the first scale is greater than the first threshold of the second scale.

With reference to the first aspect, in some implementations of the first aspect, a first transmission period corresponds to a second threshold of a third scale, a second transmission period corresponds to a second threshold of a fourth scale, and if a duration of the first transmission period is less than a duration of the second transmission period, the second threshold of the third scale is greater than the second threshold of the fourth scale.

In this way, if the transmission period is short, some narrowband signals on which LBT is not performed may be allowed to be transmitted within the short transmission period. If the transmission period is long, it may be ensured that a narrowband transmission proportion is low within the long transmission period, thereby reducing overall interference to WLAN signal transmission.

According to a second aspect, a communication method is provided. The method includes: obtaining a first duty cycle, where the first duty cycle indicates a proportion of a first transmission time in a transmission period, the first transmission time is related to a transmission time of at least one of N first channels, the N first channels are used to transmit the narrowband signal through frequency hopping, and N is a positive integer greater than or equal to 2; and enabling the LBT if the first duty cycle is greater than or equal to a second threshold; or skipping enabling the LBT if the first duty cycle is less than the second threshold.

In the foregoing technical solution, in a frequency hopping scenario, a dwell time of the narrowband signal on different channels becomes shorter, and interference to WLAN transmission is reduced. Compared with continuing to use a total duty cycle for sending the narrowband signal in a transmission period to determine whether to perform the LBT, that is, use a duty cycle at a device-level granularity to determine whether to perform the LBT, the first duty cycle in the solution of this application is related to a duty cycle of at least one of the N first channels. In this way, not only coexistence of narrowband transmission and WLAN transmission can be achieved, but also a quantity of times that a first device having a narrowband communication capability performs the LBT is reduced without increasing interference, thereby reducing a delay of narrowband signal transmission and increasing a throughput of narrowband signal transmission. In addition, based on different transmission periods, a unified second threshold may be used to reduce a quantity of times of configuring the second threshold, thereby further reducing implementation complexity.

With reference to the second aspect, in some implementations of the second aspect, the method further includes: obtaining N second duty cycles corresponding to the N first channels. An n^{th} second duty cycle indicates a proportion of an n^{th} second transmission time in the transmission period, the first duty cycle is an average value of the N second duty cycles, 1≤n≤N, and n is a positive integer.

With reference to the second aspect, in some implementations of the second aspect, enabling the LBT if the first duty cycle is greater than or equal to the second threshold includes: enabling the LBT for the N first channels if the first duty cycle is greater than or equal to the second threshold.

In this way, in a frequency hopping scenario, because the first duty cycle indicates an averaging status of the N second duty cycles of the N first channels, whether the LBT is performed for the N first channels may be determined only by comparing the first duty cycle with the second threshold. In this manner, coexistence of narrowband transmission and WLAN transmission is achieved, and a quantity of times that a first device having a narrowband communication capability performs the LBT is reduced without increasing interference, thereby reducing a delay of narrowband signal transmission. A unified determining manner can reduce calculation complexity, and is easier to implement. In addition, based on different transmission periods, a unified second threshold may be used to reduce a quantity of times of configuring the second threshold, thereby further reducing implementation complexity.

With reference to the second aspect, in some implementations of the second aspect, the first duty cycle includes a duty cycle corresponding to transmission of the narrowband signal on the n^{th} first channel when the first device performs frequency hopping to the n^{th} first channel, 1≤n≤N, and n is a positive integer.

With reference to the second aspect, in some implementations of the second aspect, enabling the LBT if the first duty cycle is greater than or equal to the second threshold includes: enabling the LBT for the n^{th} first channel if the first duty cycle is greater than or equal to the second threshold.

In this way, in a frequency hopping scenario, whether to perform the LBT for the first channel is determined based on a duty cycle of any one of the N first channels for transmitting a narrowband signal. In this manner, coexistence of narrowband transmission and WLAN transmission is achieved, and a quantity of times that a first device having a narrowband communication capability performs the LBT is reduced without increasing interference, so that a throughput of narrowband signal transmission on the first channel is increased in a more targeted and accurate manner, and a delay of narrowband signal transmission on the first channel is reduced. In addition, based on different transmission periods, a unified second threshold may be used to reduce a quantity of times of configuring the second threshold, thereby further reducing implementation complexity.

With reference to the second aspect, in some implementations of the second aspect, a value of a bandwidth corresponding to each of the first channels is one of 20 MHz, 40 MHz, 80 MHz, 160 MHz, 240 MHz, 320 MHz, 480 MHz, or 640 MHz.

With reference to the second aspect, in some implementations of the second aspect, the method further includes: obtaining a first BSS operation bandwidth corresponding to a basic service set BSS in which a first device is located. The first duty cycle includes a duty cycle corresponding to transmission of the narrowband signal on some or all of the first channels corresponding to the first BSS operation bandwidth in the N first channels.

With reference to the second aspect, in some implementations of the second aspect, enabling the LBT if the first duty cycle is greater than or equal to the second threshold includes: enabling the LBT for the some or all of the first channels if the first duty cycle is greater than or equal to the second threshold.

In this way, in a frequency hopping scenario, when the first device can sense a first BSS operation bandwidth of a BSS in which the first device is located, the first duty cycle for transmitting the narrowband signal on the some or all of the first channels corresponding to the first BSS operation bandwidth is compared with the first threshold, to determine whether to enable the LBT. In this manner, interference from narrowband signal transmission to the BSS can be determined in a more targeted manner. Consequently, coexistence of narrowband transmission and WLAN transmission is achieved, and a quantity of times that a first device having a narrowband communication capability performs the LBT is reduced without increasing interference, so that a throughput of narrowband signal transmission on a channel on which frequency domain resources overlap can also be increased more accurately, and a delay of narrowband signal transmission is reduced. In addition, based on different transmission periods, a unified second threshold may be used to reduce a quantity of times of configuring the second threshold, thereby further reducing implementation complexity.

With reference to the second aspect, in some implementations of the second aspect, the method further includes: obtaining an n^{th} second BSS operation bandwidth corresponding to an n^{th} first channel, where 1≤n≤N, and n is a positive integer; and obtaining the first duty cycle includes: obtaining, based on the n^{th} second BSS operation bandwidth, an n^{th} first duty cycle corresponding to a transmission time for transmitting the narrowband signal on the n^{th} first channel.

With reference to the second aspect, in some implementations of the second aspect, enabling the LBT if the first duty cycle is greater than or equal to the second threshold includes: enabling the LBT for the n^{th} first channel if the n^{th} first duty cycle is greater than or equal to the second threshold.

In this way, in a frequency hopping scenario, BSS operation bandwidths corresponding to different BSSs of different first channels are sensed, and different duty cycles of the different first channels are compared with the first threshold, to determine whether to enable the LBT. In this way, interference that may be caused by narrowband signal transmission to different BSSs in WLAN transmission can be more accurately learned in advance across an entire frequency band. In this manner, coexistence of narrowband transmission and WLAN transmission can be achieved, and a quantity of times that a first device having a narrowband communication capability performs the LBT is reduced without increasing interference, so that a throughput of narrowband signal transmission is further increased in a more targeted and accurate manner, and a delay of narrowband signal transmission is reduced. In addition, based on different transmission periods, a unified second threshold may be used to reduce a quantity of times of configuring the second threshold, thereby further reducing implementation complexity.

With reference to the second aspect, in some implementations of the second aspect, the first transmission time is related to a transmission time for transmitting the narrowband signal by the first device, a bandwidth of the first channel, and a total bandwidth for transmitting the narrowband signal.

In this way, when probabilities of narrowband signal frequency hopping across different channels are approximately the same, calculation complexity can be further reduced, and a delay of narrowband signal transmission can be reduced.

With reference to the second aspect, in some implementations of the second aspect, the method further includes: obtaining the first transmission time based on the first duty cycle; and enabling the listen-before-talk LBT if the first duty cycle is greater than or equal to the second threshold; or skipping enabling the LBT if the first duty cycle is less than the second threshold includes: enabling the LBT if the first transmission time is greater than or equal to a first threshold; or skipping enabling the LBT if the first transmission time is less than the first threshold.

With reference to the second aspect, in some implementations of the second aspect, a type of the transmission period includes any one of the following: a ranging round, a sensing round, a total interval applied to a ranging scenario, a total interval applied to a sensing scenario, a duration of a ranging block, a duration of a sensing block, or a duration of a hyper block. The total interval applied to the ranging scenario includes the ranging round and a non-ranging round, and the total interval applied to the sensing scenario includes the sensing round and the non-sensing round. The duration of the ranging block includes a ranging round of a first user and a non-ranging round of the first user, and the duration of the sensing block includes a sensing round of the first user and a non-sensing round of the first user. The duration of the hyper block includes a duration of one or more ranging blocks, or the duration of the hyper block includes a duration of one or more sensing blocks.

With reference to the second aspect, in some implementations of the second aspect, transmission periods of different types correspond to first thresholds of different scales, or the transmission periods of different types correspond to second thresholds of different scales.

In this way, transmission periods of different types correspond to first thresholds of different scales or second thresholds of different scales, so that flexibility of determining whether to perform the LBT can be improved.

With reference to the second aspect, in some implementations of the second aspect, a first transmission period corresponds to a first threshold of a first scale, a second transmission period corresponds to a first threshold of a second scale, and if a duration of the first transmission period is less than a duration of the second transmission period, the first threshold of the first scale is greater than the first threshold of the second scale.

With reference to the second aspect, in some implementations of the second aspect, a first transmission period corresponds to a second threshold of a third scale, a second transmission period corresponds to a second threshold of a fourth scale, and if a duration of the first transmission period is less than a duration of the second transmission period, the second threshold of the third scale is greater than the second threshold of the fourth scale.

According to a third aspect, a communication apparatus is provided. The apparatus includes a transceiver unit and a processing unit. The transceiver unit is configured to obtain a first transmission time. The first transmission time is related to a transmission time of at least one of N first channels, the N first channels are used to transmit a narrowband signal through frequency hopping, and N is a positive integer greater than or equal to 2. The processing unit is configured to enable listen-before-talk LBT if the first transmission time is greater than or equal to a first threshold; or skip enabling the LBT if the first transmission time is less than the first threshold.

It should be understood that the technical solution of the communication apparatus in the third aspect corresponds to the first aspect. For corresponding technical effects, refer to the first aspect. Details are not described herein again.

With reference to the third aspect, in some implementations of the third aspect, the transceiver unit is further configured to obtain N second transmission times corresponding to the N first channels. An n^{th} second transmission time includes a transmission time of the narrowband signal on an n^{th} first channel, the first transmission time is an average value of the N second transmission times, 1≤n≤N, and n is a positive integer.

With reference to the third aspect, in some implementations of the third aspect, the processing unit is specifically configured to enable the LBT for the N first channels if the first transmission time is greater than or equal to the first threshold.

With reference to the third aspect, in some implementations of the third aspect, the first transmission time includes a transmission time of the narrowband signal on an n^{th} first channel when a first device performs frequency hopping to the n^{th} first channel, 1≤n≤N, and n is a positive integer.

With reference to the third aspect, in some implementations of the third aspect, the processing unit is specifically configured to enable the LBT for the n^{th} first channel if the first transmission time is greater than or equal to the first threshold.

With reference to the third aspect, in some implementations of the third aspect, a value of a bandwidth corresponding to each of the first channels is one of 20 MHz, 40 MHz, 80 MHz, 160 MHz, 240 MHz, 320 MHz, 480 MHz, or 640 MHz.

With reference to the third aspect, in some implementations of the third aspect, the transceiver unit is further configured to obtain a first BSS operation bandwidth corresponding to a basic service set BSS in which a first device is located. The first transmission time includes a transmission time of the narrowband signal on some or all of the first channels corresponding to the first BSS operation bandwidth in the N first channels.

With reference to the third aspect, in some implementations of the third aspect, the processing unit is specifically configured to enable the LBT for the some or all of the first channels if the first transmission time is greater than or equal to the first threshold.

With reference to the third aspect, in some implementations of the third aspect, the transceiver unit is further configured to obtain an n^{th} second BSS operation bandwidth corresponding to an n^{th} first channel, where 1≤n≤N, and n is a positive integer. The transceiver unit is specifically configured to obtain, based on the n^{th} second BSS operation bandwidth, an n^{th} first transmission time corresponding to transmission of the narrowband signal on the n^{th} first channel.

With reference to the third aspect, in some implementations of the third aspect, the processing unit is specifically configured to enable the LBT for the n^{th} first channel if the n^{th} first transmission time is greater than or equal to the first threshold.

With reference to the third aspect, in some implementations of the third aspect, the first transmission time is related to a transmission time for transmitting the narrowband signal by the first device, a bandwidth of the first channel, and a total bandwidth for transmitting the narrowband signal.

With reference to the third aspect, in some implementations of the third aspect, the processing unit is further configured to obtain a first duty cycle based on the first transmission time. The first duty cycle indicates a proportion of the first transmission time in a transmission period. The processing unit is specifically configured to enable the LBT if the first duty cycle is greater than or equal to a second threshold; or skip enabling the LBT if the first duty cycle is less than the second threshold.

With reference to the third aspect, in some implementations of the third aspect, a type of the transmission period includes any one of the following: a ranging round, a sensing round, a total interval applied to a ranging scenario, a total interval applied to a sensing scenario, a duration of a ranging block, a duration of a sensing block, or a duration of a hyper block. The total interval applied to the ranging scenario includes the ranging round and a non-ranging round, and the total interval applied to the sensing scenario includes the sensing round and the non-sensing round. The duration of the ranging block includes a ranging round of a first user and a non-ranging round of the first user, and the duration of the sensing block includes a sensing round of the first user and a non-sensing round of the first user. The duration of the hyper block includes a duration of one or more ranging blocks, or the duration of the hyper block includes a duration of one or more sensing blocks.

With reference to the third aspect, in some implementations of the third aspect, transmission periods of different types correspond to first thresholds of different scales, or the transmission periods of different types correspond to second thresholds of different scales.

In this way, transmission periods of different types correspond to first thresholds of different scales or second thresholds of different scales, so that flexibility of determining whether to perform the LBT can be improved.

With reference to the third aspect, in some implementations of the third aspect, a first transmission period corresponds to a first threshold of a first scale, a second transmission period corresponds to a first threshold of a second scale, and if a duration of the first transmission period is less than a duration of the second transmission period, the first threshold of the first scale is greater than the first threshold of the second scale.

With reference to the third aspect, in some implementations of the third aspect, a first transmission period corresponds to a second threshold of a third scale, a second transmission period corresponds to a second threshold of a fourth scale, and if a duration of the first transmission period is less than a duration of the second transmission period, the second threshold of the third scale is greater than the second threshold of the fourth scale.

According to a fourth aspect, a communication apparatus is provided. The apparatus includes a transceiver unit and a processing unit. The transceiver unit is configured to obtain a first duty cycle. The first duty cycle indicates a proportion of a first transmission time in a transmission period, the first transmission time is related to a transmission time of at least one of N first channels, the N first channels are used to transmit the narrowband signal through frequency hopping, and N is a positive integer greater than or equal to 2. The processing unit is configured to enable the LBT if the first duty cycle is greater than or equal to a second threshold; or skip enabling the LBT if the first duty cycle is less than the second threshold.

It should be understood that the technical solution of the communication apparatus in the fourth aspect corresponds to the second aspect. For corresponding technical effects, refer to the second aspect. Details are not described herein again.

With reference to the fourth aspect, in some implementations of the fourth aspect, the transceiver unit is further configured to obtain N second duty cycles corresponding to the N first channels. An n^{th} second duty cycle indicates a proportion of an n^{th} second transmission time in the transmission period, the first duty cycle is an average value of the N second duty cycles, 1≤n≤N, and n is a positive integer.

With reference to the fourth aspect, in some implementations of the fourth aspect, the processing unit is specifically configured to enable the LBT for the N first channels if the first duty cycle is greater than or equal to the second threshold.

With reference to the fourth aspect, in some implementations of the fourth aspect, the first duty cycle includes a duty cycle corresponding to transmission of the narrowband signal on the n^{th} first channel when the first device performs frequency hopping to the n^{th} first channel, 1≤n≤N, and n is a positive integer.

With reference to the fourth aspect, in some implementations of the fourth aspect, the processing unit is specifically configured to enable the LBT for the n^{th} first channel if the first duty cycle is greater than or equal to the second threshold.

With reference to the fourth aspect, in some implementations of the fourth aspect, a value of a bandwidth corresponding to each of the first channels is one of 20 MHz, 40 MHz, 80 MHz, 160 MHz, 240 MHz, 320 MHz, 480 MHz, or 640 MHz.

With reference to the fourth aspect, in some implementations of the fourth aspect, the transceiver unit is further configured to obtain a first BSS operation bandwidth corresponding to a basic service set BSS in which a first device is located. The first duty cycle includes a duty cycle corresponding to transmission of the narrowband signal on some or all of the first channels corresponding to the first BSS operation bandwidth in the N first channels.

With reference to the fourth aspect, in some implementations of the fourth aspect, the processing unit is specifically configured to enable the LBT for the some or all of the first channels if the first duty cycle is greater than or equal to the second threshold.

With reference to the fourth aspect, in some implementations of the fourth aspect, the transceiver unit is further configured to obtain an n^{th} second BSS operation bandwidth corresponding to an n^{th} first channel, where 1≤n≤N, and n is a positive integer. The transceiver unit is specifically configured to obtain, based on the n^{th} second BSS operation bandwidth, an n^{th} first duty cycle corresponding to a transmission time for transmitting the narrowband signal on the n^{th} first channel.

With reference to the fourth aspect, in some implementations of the fourth aspect, the processing unit is specifically configured to enable the LBT for the n^{th} first channel if the n^{th} first duty cycle is greater than or equal to the second threshold.

With reference to the fourth aspect, in some implementations of the fourth aspect, the first transmission time is related to a transmission time for transmitting the narrowband signal by the first device, a bandwidth of the first channel, and a total bandwidth for transmitting the narrowband signal.

With reference to the fourth aspect, in some implementations of the fourth aspect, the processing unit is further configured to obtain the first transmission time based on the first duty cycle. The processing unit is specifically configured to enable the LBT if the first transmission time is greater than or equal to a first threshold; or skip enabling the LBT if the first transmission time is less than the first threshold.

With reference to the fourth aspect, in some implementations of the fourth aspect, a type of the transmission period includes any one of the following: a ranging round, a sensing round, a total interval applied to a ranging scenario, a total interval applied to a sensing scenario, a duration of a ranging block, a duration of a sensing block, or a duration of a hyper block. The total interval applied to the ranging scenario includes the ranging round and a non-ranging round, and the total interval applied to the sensing scenario includes the sensing round and the non-sensing round. The duration of the ranging block includes a ranging round of a first user and a non-ranging round of the first user, and the duration of the sensing block includes a sensing round of the first user and a non-sensing round of the first user. The duration of the hyper block includes a duration of one or more ranging blocks, or the duration of the hyper block includes a duration of one or more sensing blocks.

With reference to the fourth aspect, in some implementations of the fourth aspect, transmission periods of different types correspond to first thresholds of different scales, or the transmission periods of different types correspond to second thresholds of different scales.

In this way, transmission periods of different types correspond to first thresholds of different scales or second thresholds of different scales, so that flexibility of determining whether to perform the LBT can be improved.

With reference to the fourth aspect, in some implementations of the fourth aspect, a first transmission period corresponds to a first threshold of a first scale, a second transmission period corresponds to a first threshold of a second scale, and if a duration of the first transmission period is less than a duration of the second transmission period, the first threshold of the first scale is greater than the first threshold of the second scale.

With reference to the fourth aspect, in some implementations of the fourth aspect, a first transmission period corresponds to a second threshold of a third scale, a second transmission period corresponds to a second threshold of a fourth scale, and if a duration of the first transmission period is less than a duration of the second transmission period, the second threshold of the third scale is greater than the second threshold of the fourth scale.

According to a fifth aspect, a communication apparatus is provided. The apparatus includes: a memory, configured to store a program; and a processor, configured to execute a computer program or instructions stored in the memory. When the computer program or the instructions stored in the memory are executed, the processor is configured to perform the method provided in any one of the implementations of the first aspect or the second aspect.

In an implementation, the apparatus is the first device in the communication method.

In another implementation, the apparatus is a chip, a chip system, or a circuit in the first device in the communication method.

According to a sixth aspect, this application provides a processor, configured to perform the method according to any one of the implementations of the first aspect and the second aspect. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to an interface, and transmits the information through the interface. After the information is output by the processor, other processing may further need to be performed on the information before the information arrives at the interface. Similarly, when the processor receives the foregoing input information, the interface obtains/receives the foregoing information, and inputs the foregoing information into the processor. Further, after the interface receives the foregoing information, other processing may need to be performed on the foregoing information before the foregoing information is input into the processor.

Unless otherwise specified, if operations such as related transmitting, sending, and obtaining/receiving do not contradict an actual function or internal logic in related descriptions, the operations may be understood as operations such as outputting, receiving, and inputting, or may be understood as operations such as transmitting, sending, and receiving performed by a radio frequency circuit and an antenna. This is not limited in this application.

In an implementation process, the processor may be a processor specially configured to perform these methods, or may be a processor, for example, a general-purpose processor, that executes a computer program or instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a seventh aspect, a computer-readable storage medium is provided. The computer-readable storage medium stores program code to be executed by a device, and the program code is used to perform the method according to any one of the implementations of the first aspect and the second aspect.

According to an eighth aspect, a computer program product including instructions is provided. When the computer program product is run on a computer, the computer is enabled to perform the method according to any one of the implementations of the first aspect and the second aspect.

According to a ninth aspect, a chip is provided. The chip includes a processor and a communication interface. The processor reads, through the communication interface, instructions stored in a memory, to perform the method according to any one of the implementations of the first aspect and the second aspect.

Optionally, in an implementation, the chip may further include the memory. The memory stores a computer program or instructions. The processor is configured to execute the computer program or the instructions stored in the memory. When the computer program or the instructions are executed, the processor is configured to perform the method according to any one of the implementations of the first aspect and the second aspect.

### BRIEF DESCRIPTION OF DRAWINGS

FIG. 1 is a diagram of an application scenario according to an embodiment of this application;
FIG. 2 is a diagram of a UNII-3 frequency band and a UNII-5 frequency band according to an embodiment of this application;
FIG. 3 is a schematic flowchart of a communication method according to an embodiment of this application;
FIG. 4A and FIG. 4B are diagrams of a transmission time and a transmission period according to an embodiment of this application;
FIG. 5 is a schematic flowchart of another communication method according to an embodiment of this application;
FIG. 6 is an interaction diagram of a communication method according to an embodiment of this application;
FIG. 7A and FIG. 7B are diagrams of a first transmission time according to an embodiment of this application;
FIG. 8A and FIG. 8B are diagrams of another first transmission time according to an embodiment of this application;
FIG. 9A and FIG. 9B are diagrams of still another first transmission time according to an embodiment of this application;
FIG. 10A and FIG. 10B are diagrams of yet another first transmission time according to an embodiment of this application;
FIG. 11 is a diagram of a communication apparatus 1100 according to an embodiment of this application;
FIG. 12 is a diagram of a structure of a communication apparatus 1200 according to an embodiment of this application;
FIG. 13 is a diagram of a chip system 1300 according to an embodiment of this application;
FIG. 14A and FIG. 14B are diagrams of another UNII-3 frequency band and another UNII-5 frequency band according to an embodiment of this application;
FIG. 15 is a diagram of a transmission period according to an embodiment of this application;
FIG. 16 is a diagram of another transmission period according to an embodiment of this application; and
FIG. 17 is a diagram of another transmission period according to an embodiment of this application.

### DESCRIPTION OF EMBODIMENTS

For ease of understanding of embodiments of this application, the following descriptions are provided.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually represents an "or" relationship between associated objects. "At least one of the following" or a similar expression thereof indicates any combination of these items, including a single item or any combination of a plurality of items. For example, at least one of a, b, and c may indicate a, b, c, "a and b", "a and c", "b and c", or "a, b, and c". Each of a, b, and c may be in a singular form or a plural form.

Third, in this application, "first", "second", and various numerical numbers (for example, #1 and #2) are merely used for distinguishing for ease of description, but are not intended to limit the scope of embodiments of this application, for example, are intended to distinguish between different duty cycles but not to describe a specific order or sequence. It should be understood that objects described in such a way are interchangeable in an appropriate circumstance, so that a solution other than embodiments of this application can be described.

Fourth, in this application, descriptions such as "when...", "in a case of...", and "if" all mean that corresponding processing is performed in a specific objective situation, and are not intended to limit time. The descriptions do not mean that a determining action is required during implementation, and do not mean any other limitation. In addition, it does not mean that a determining action after these condition conjunctions is the only condition for implementing the result, and other additional conditions may be included to implement the result.

Fifth, in this application, the terms "include", "have", and any variants thereof are intended to cover a non-exclusive inclusion. For example, a process, method, system, product, or device including a series of steps or units is not necessarily limited to those steps or units explicitly listed, but may include other steps or units that are not explicitly listed or are inherent to the process, method, product, or device.

Sixth, in this application, "indicate" may include a direct indication and an indirect indication. When a piece of indication information is described to indicate A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in this application, "store" may mean being stored in one or more memories. The one or more memories may be separately disposed, or may be integrated into an encoder or a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

Ninth, in this application, "communication" may also be described as "data transmission", "information transmission", "data processing", or the like. "Transmission" includes "sending" and "receiving".

Embodiments of this application may be applied to a wireless personal area network (wireless personal area network, WPAN) that has a narrowband communication capability. Currently, a standard used for an ultra-bandwidth-based WPAN is the IEEE 802.15 series. The WPAN may be used for communication between digital auxiliary devices in a small range, for example, a telephone, a computer, and an auxiliary device, and an operating range of the WPAN is usually within 10 m. Technologies supporting the wireless personal area network include Bluetooth (Bluetooth), ZigBee (ZigBee), ultra-wideband (UWB), an IrDA infrared (infrared) connection technology, HomeRF, and the like. The Bluetooth Alliance defines two modes: a Bluetooth mode and a Bluetooth low energy (Bluetooth low energy) mode. A person skilled in the art easily understands that, various aspects in this application may be applied to another network using various standards or protocols, for example, a wireless local area network (wireless local area network, WLAN), a high performance radio LAN (high performance radio LAN, HIPERLAN) (a wireless standard similar to the IEEE 802.11 standard, mainly used in Europe), a wide area network (WAN), or another network that is currently known or developed in the future. The WLAN may support an IEEE 802.11-related standard, for example, the 802.11a/b/g standard, the 802.11n standard, the 802.11ac standard, the 802.11ax standard, or a next-generation Wi-Fi protocol of IEEE 802.11ax, such as 802.11be, Wi-Fi 7, extremely high throughput (extremely high throughput, EHT), 802.11ad, 802.11ay, or 802.11bf. Further examples include a next-generation protocol of 802.11be, such as 802.11bn, Wi-Fi 8, and the integrated millimeter wave (Integrated Millimeter Wave, IMMW) study group. Various aspects in this application may be further applied to a sensing (sensing) system, for example, standards of the 802.11bf series. The 802.11n standard is referred to as high throughput (high throughput, HT), the 802.11ac standard is referred to as very high throughput (very high throughput, VHT), the 802.11ax standard is referred to as high efficiency (high efficiency, HE), the 802.11be standard is referred to as extremely high throughput (extremely high throughput, EHT), and the 802.11bn standard is referred to as ultra-high reliability (ultra-high reliability, UHR).

This application supports the IEEE protocol, for example, the IEEE 802.11be/Wi-Fi 7/EHT protocol, the IEEE 802.11bn/UHR/Wi-Fi 8 protocol, the IEEE Integrated mmWave/integrated millimeter wave/IMMW protocol, the IEEE 802.15/UWB protocol, or the IEEE 802.11bf/sensing/sensing/sensing protocol. This application may also support the SparkLink/spark link/NearLink standard protocol.

Embodiments of this application are further applicable to a wireless local area network system, such as an Internet of things (Internet of things, IoT) network or a vehicle-to-everything (vehicle to X, V2X) network. Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, and a future 6th generation (6th generation, 6G) communication system.

The foregoing communication systems applicable to this application are merely examples for description, and the communication systems applicable to this application are not limited thereto. This is described herein in a unified manner, and details are not described below again.

In embodiments of this application, the foregoing device may be an access point (access point, AP) and a station (station, STA), for example, a communication server, a router, a switch, a bridge, a computer, a mobile phone, a home smart device, or an in-vehicle communication device.

The following describes technical solutions of this application with reference to the accompanying drawings.

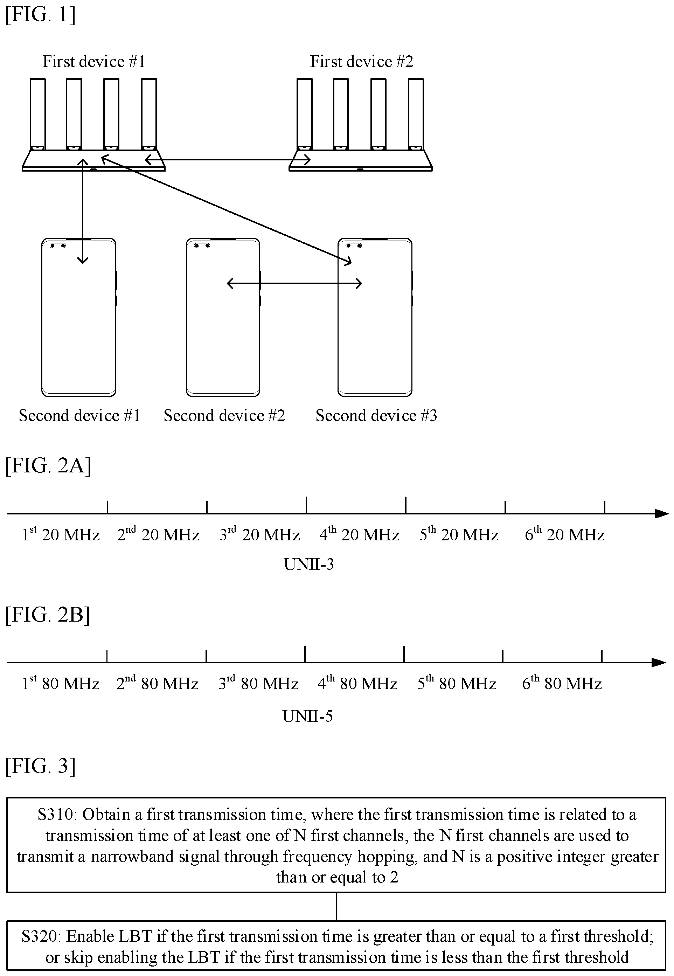

FIG. 1 is a diagram of an application scenario according to an embodiment of this application. As shown in FIG. 1, the communication method provided in this application is applicable to data communication between a first device and a second device, between first devices, or between second devices. Specifically, the solutions in this application are applicable to data communication between the first device and one or more second devices (for example, data communication between a first device #1 and a second device #1 and a second device #3), applicable to data communication between first devices (for example, data communication between the first device #1 and a first device #2), and applicable to data communication between second devices (for example, data communication between a second device #2 and the second device #3).

For example, when the first device and/or the second device have/has a WLAN communication capability, the first device may be an access point AP station, and the second device may be a non-access point station (non-access point station, non-AP STA), which are respectively referred to as an AP (or an access point) and a STA (or a non-AP station) for short. When the first device and/or the second device have/has a narrowband communication capability, for example, a UWB communication capability, the first device may be referred to as an initiator (initiator), and the second device may be referred to as a responder (responder). It should be understood that when the first device and the second device have different communication capabilities, the first device and the second device may have different names. This is not limited herein.

The first device may be an access point used by a terminal (for example, a mobile phone) to access a wired (or wireless) network, and is mainly deployed at home, in a building, and in a park. A typical coverage radius is tens of meters to hundreds of meters. Certainly, the first device may alternatively be deployed outdoors. At this point, the first device is equivalent to a bridge that connects a wired network and a wireless network. A main function of the first device is to connect various wireless network clients together and then connect the wireless network to the Ethernet.

Specifically, the first device may be a terminal or a network device that has a narrowband communication capability, or has a WLAN communication capability and a narrowband communication capability. The network device may be a server, a router, a switch, a bridge, a computer, a mobile phone, a relay station, an in-vehicle device, a wearable device, a network device in a 5G network, a network device in a future 6G network, a network device in a public land mobile communication network (public land mobile network, PLMN), or the like. This is not limited in embodiments of this application. The first device is a device having a narrowband transmission capability. For example, the first device may support one or more standards of the IEEE 802.15 family, such as 802.15.4ab and 802.15.3. For another example, the first device may support a Bluetooth transmission mode or a Bluetooth low energy transmission mode. The first device may be a device that supports a WLAN standard. For example,

the first device may also support one or more standards of the IEEE 802.11 family, such as 802.11a, 802.11b, 802.11g, 802.11n, 802.11ac, 802.11ax, 802.11be, 802.11bn, 802.11ad, and 802.11ay.

For example, the second device may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The second device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, an internet of things device, a wearable device, a terminal device in a 5G network, a terminal device in a future 6G network, a terminal device in a PLMN, or the like. This is not limited in embodiments of this application. The second device may be a device having a narrowband transmission capability. For example, the second device may support one or more standards of the IEEE 802.15 family, such as 802.15.4ab and 802.15.3. For another example, the second device may support a Bluetooth transmission mode or a Bluetooth low energy transmission mode. Alternatively, the second device may be a device that supports a WLAN standard. For example, the non-AP station may support one or more standards of the IEEE 802.11 family, such as 802.11a, 802.11b, 802.11g, 802.11n, 802.11ac, 802.11ax, 802.11be, 802.11bn, 802.11ad, and 802.11ay.

For example, the second device may be a mobile phone, a tablet computer, a set-top box, a smart television, a smart wearable device, an in-vehicle communication device, a computer, an internet of things (internet of things, IoT) node, a sensor, a smart camera, a smart remote control, or a smart water/electricity meter in a smart home, and a sensor in a smart city.

The first device or the second device may include a transmitter, a receiver, a memory, a processor, and the like. The transmitter and the receiver are respectively configured to send and receive a packet structure. The memory is configured to store signaling information, store a preset value agreed in advance, and the like. The processor is configured to parse signaling information, process related data, and the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable medium" may include but is not limited to a radio channel, and various other media that can store, contain and/or carry instructions and/or data.

For ease of understanding of embodiments of this application, technical terms in embodiments of this application are first briefly described.

### 1. Frequency hopping (frequency hopping, FH)

A change in a frequency position to which to-be-transmitted data is mapped is referred to as frequency hopping. Generally, when frequency hopping is enabled, the frequency position to which the to-be-transmitted data is mapped varies at different moments. The frequency position of the to-be-transmitted data may differ across different transmission times (for example, slots). Frequency hopping may be used to obtain a frequency diversity gain of a communication system, and improve data transmission performance.

### 2. UNII-3

A UNII-3 frequency band ranges from 5.725 GHz to 5.850 GHz, with a total spectrum of 125 MHz. FIG. 2 is a diagram of the UNII-3 frequency band and a UNII-5 frequency band according to an embodiment of this application. As shown in FIG. 2A, a 20 MHz bandwidth is used as an example of a WLAN transmission channel. Therefore, six 20 MHz channels are included in total. Two 20 MHz channels may form one 40 MHz channel, and two 40 MHz channels may further form one 80 MHz channel. Channels of a same bandwidth do not overlap with each other. To be specific, a first 20 MHz channel and a second 20 MHz channel may form a first 40 MHz channel. In this case, the second 20 MHz channel and a third 20 MHz channel cannot form a second 40 MHz channel. Instead, the third 20 MHz channel and a fourth 20 MHz channel may form the second 40 MHz, and so on.

### 3. UNII-5

A UNII-5 frequency band ranges from 5.925 GHz to 6.425 GHz, with a total spectrum of 500 MHz, and may include twenty-five 20 MHz channels, to form twelve 40 MHz channels or six 80 MHz channels (as shown in FIG. 2B, where an 80 MHz WLAN transmission channel is used as an example), or three 160 MHz channels or two 320 MHz channels. Because the 320 MHz channel is rare, it is allowed that a first 160 MHz channel and a second 160 MHz channel form a first 320 MHz channel, and the second 160 MHz channel and a third 160 MHz channel form a second 320 MHz channel. The two 320 MHz channels overlap with each other, which constitutes an exception.

It should be understood that in embodiments of this application, only the two frequency bands are used as an example for description, and a specific value of a specific frequency band and a specific value of a bandwidth are not limited in this application.

### 4. Device-level duty cycle (duty cycle)

A duty cycle is a proportion, within a duration of a specific transmission period, of a sending duration for sending data by a device in a duration of an entire transmission period. Alternatively, the duty cycle may be a proportion, within a duration of a specific transmission period, of a transmission duration for transmitting data by a device in a duration of an entire transmission period. The data transmission includes sending and receiving data. Alternatively, the duty cycle may be a proportion, within a duration of a specific transmission period, of a duration of a device in a wake-up state in a duration of an entire transmission period.

### 5. Basic service set (basic service set, BSS)

The BSS is a basic component (building block) of an 802.11 network, and is used to describe a group of mobile devices that communicate with each other in an 802.11 WLAN.

There are two types of basic service sets: one is a basic service set in an infrastructure mode, which includes one AP and several STAs; and the other is a basic service set in an independent mode, which includes several STAs.

Specifically, each basic service set has a unique identifier, which is referred to as a basic service set identifier (basic service set identifier, BSSID), and corresponds to a MAC address of the AP. The BSS in embodiments of this application is a BSS in the infrastructure mode. An AP and a STA included in the BSS of this type may be referred to as an AP and a STA that are associated with each other. For example, an AP and a STA included in a BSS #1 are associated with each other.

Currently, a transmission frequency band of Bluetooth in narrowband transmission may be further extended from an original 2.4 GHz to 5 GHz and 6 GHz. Narrowband frequency bands for UWB transmission in narrowband transmission also cover 5 GHz and 6 GHz. The UNII-3 frequency band and the UNII-5 frequency band described above may also be used for WLAN transmission. Therefore, interference easily occurs between narrowband transmission and WLAN transmission. Currently, a method for mitigating interference between narrowband transmission and WLAN transmission does not consider a frequency hopping scenario, that is, does not consider that a frequency hopping technology can reduce interference from the WLAN transmission. As a result, even when interference from the narrowband transmission to the WLAN transmission is reduced, a throughput rate of the narrowband transmission may be decreased and a transmission delay may be increased.

Therefore, in a frequency hopping scenario, how to achieve coexistence between the narrowband transmission and the WLAN transmission while reducing a delay of the narrowband transmission is an urgent problem to be resolved.

For the foregoing problem, embodiments of this application provide a communication method and apparatus. The following provides detailed descriptions with reference to FIG. 3 to FIG. 13.

FIG. 3 is a schematic flowchart of a communication method according to an embodiment of this application. It may be understood that the first device or the second device may perform the communication method, but an execution body is not limited in this application. For example, the communication method is implemented by the first device or the second device, or may be implemented by a module (such as a chip, a chip system, or a processor) of the first device or the second device, or may be implemented by a logical node, a logical module, or software that can implement all or some functions of the first device, or may be implemented by a logical node, a logical module, or software that can implement all or some functions of the second device.

S310: Obtain a first transmission time, where the first transmission time is related to a transmission time of at least one of N first channels, the N first channels are used to transmit a narrowband signal through frequency hopping, and N is a positive integer greater than or equal to 2.

It should be understood that the first transmission time may be determined based on the transmission time of the at least one of the N first channels.

In a possible implementation, N second transmission times corresponding to the N first channels are obtained. An n^{th} second transmission time includes a transmission time of the narrowband signal on an n^{th} first channel, and the first transmission time is an average value of the N second transmission times.

Optionally, the first transmission time may be a median or a mode of the N second transmission times.

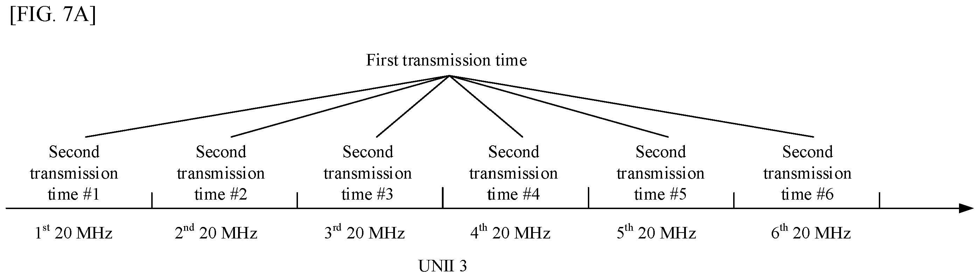

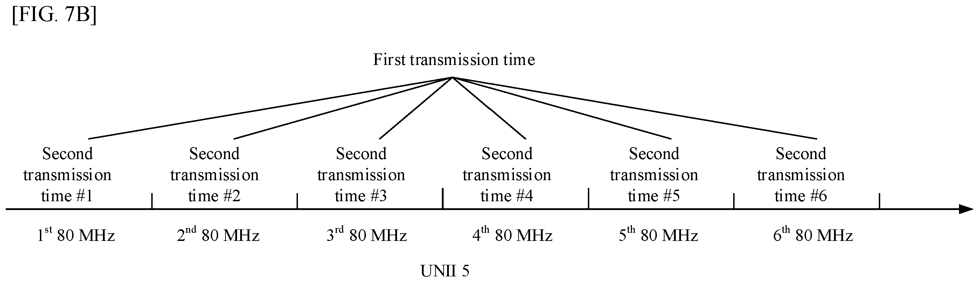

It should be understood that the first transmission time weakens a difference among the N second transmission times corresponding to the N first channels. Specifically, an average value, a median, or a mode of the N second transmission times is selected as the first transmission time. This is not limited in this application. A specific form of the first transmission time is subsequently described in detail by using an example with reference to FIG. 7A and FIG. 7B.

In a possible implementation, the first transmission time includes a transmission time of the narrowband signal on the n^{th} first channel when the first device performs frequency hopping to the n^{th} first channel.

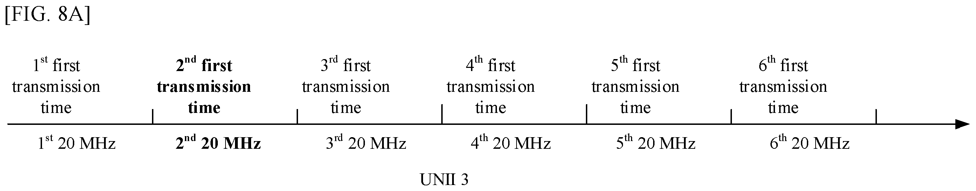

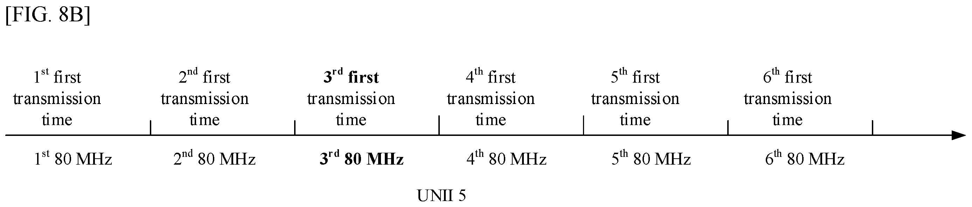

In other words, the first transmission time may correspond to a case in which the first device performs frequency hopping to a first channel in the N first channels, and the first channel may be used to transmit a narrowband signal. In other words, the first transmission time may include a transmission time for transmitting a narrowband signal corresponding to any one of the N first channels. A specific form of the first transmission time is subsequently described in detail by using an example with reference to FIG. 8A and FIG. 8B.

Optionally, a value of a bandwidth corresponding to each of the N first channels may be one of 20 MHz, 40 MHz, 80 MHz, 160 MHz, 240 MHz, 320 MHz, 480 MHz, or 640 MHz. This is not limited in this embodiment of this application. It should be understood that spectra in a UNII-3 frequency band and a UNII-5 frequency band in this embodiment of this application are specific examples, and this embodiment of this application is not limited to the spectra in the two frequency bands.

It should be understood that values of bandwidths of all first channels may be the same, or values of bandwidths of all first channels may be different. The following uses detailed examples with reference to FIG. 7A, FIG. 7B, FIG. 8A, and FIG. 8B.

In a possible implementation, a first BSS operation bandwidth corresponding to a basic service set BSS in which the first device is located is obtained. The first transmission time includes a transmission time of the narrowband signal on some or all of the first channels corresponding to the first BSS operation bandwidth in the N first channels.

It should be understood that the first device has both a WLAN communication capability and a narrowband transmission communication capability, and the first device may sense the first BSS operation bandwidth of the BSS in which the first device is located and the some or all of the first channels corresponding to the first BSS operation bandwidth. WLAN transmission and narrowband signal transmission may be performed on the some or all of the first channels corresponding to the first BSS operation bandwidth. In other words, the some or all of the first channels are a part on which WLAN transmission and narrowband signal transmission overlap. For example, the first BSS operation bandwidth may be an integer multiple of a basic bandwidth. For example, a value of the basic bandwidth may be 20 MHz, 40 MHz, 80 MHz, 160 MHz, 240 MHz, 320 MHz, 480 MHz, or 640 MHz.

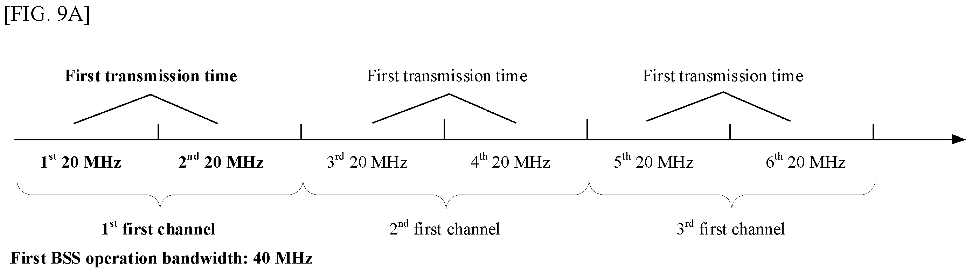

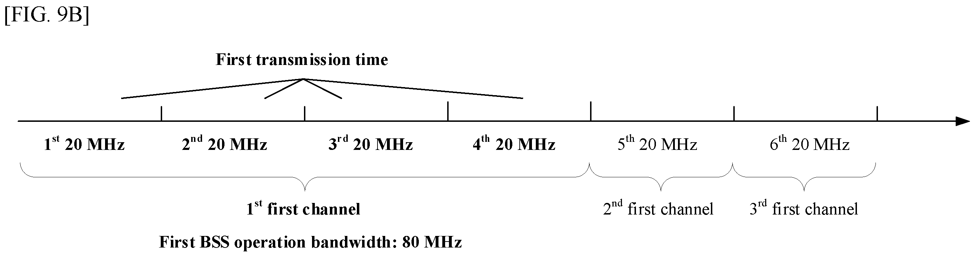

In other words, the first transmission time includes transmission times corresponding to the some or all of the first channels on which WLAN transmission and narrowband signal transmission overlap. A specific form of the first transmission time is subsequently described in detail by using an example with reference to FIG. 9A and FIG. 9B.

In a possible implementation, an n^{th} second BSS operation bandwidth corresponding to an n^{th} first channel is obtained, where 1≤n≤N, and n is a positive integer. An n^{th} first transmission time corresponding to transmission of the narrowband signal on the n^{th} first channel is obtained based on the n^{th} second BSS operation bandwidth.

It should be understood that the first device has both a WLAN communication capability and a narrowband transmission communication capability, and the first device has a capability of supporting BSS operation bandwidths corresponding to different BSSs on different first channels within a given frequency band.

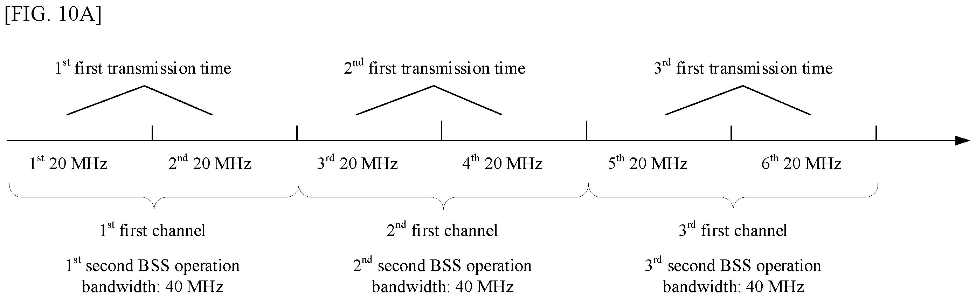

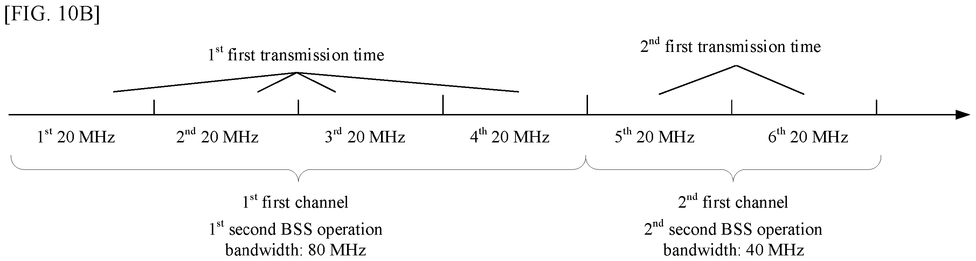

It should be further understood that the N first channels may correspond to N second BSS operation bandwidths, and a second BSS operation bandwidth corresponding to each first channel may be the same or may be different. This is not limited in this embodiment of this application. For example, the second BSS operation bandwidth may be an integer multiple of a basic bandwidth. For example, a value of the basic bandwidth may be 20 MHz, 40 MHz, 80 MHz, 160 MHz, 240 MHz, 320 MHz, 480 MHz, or 640 MHz. A specific form of the first transmission time is subsequently described in detail by using an example with reference to FIG. 10A and FIG. 10B.

Optionally, a first duty cycle is obtained based on the first transmission time. The first duty cycle indicates a proportion of the first transmission time in a transmission period.

S320: Enable listen-before-talk (listen before talk, LBT) if the first transmission time is greater than or equal to a first threshold. Skip enabling the LBT if the first transmission time is less than the first threshold.

Optionally, if the first transmission time is greater than the first threshold, the LBT is enabled. If the first transmission time is less than or equal to the first threshold, the LBT is not enabled.

It should be understood that this embodiment of this application does not impose any limitation on whether the LBT is enabled or not when the first transmission time is equal to the first threshold.

It should be understood that the first threshold is related to the transmission period, and the first threshold may be the same or different for different frequency bands (for example, the UNII-3 and the UNII-5). For example, a range of the first threshold may be from 0 to the transmission period. Alternatively, the range of the first threshold may be less than or equal to 0. Alternatively, the range of the first threshold may be greater than or equal to the transmission period.

For a case in which the LBT is enabled when the first transmission time is equal to the first threshold, the following manners may be specifically used.

Optionally, when the first threshold is less than or equal to 0, and the first transmission time is greater than or equal to the first threshold, the LBT is enabled.

Optionally, when the first threshold is greater than the transmission period, and the first transmission time is less than the first threshold, the LBT is not enabled.

For a case in which the LBT is not enabled when the first transmission time is equal to the first threshold, the following manners may be specifically used.

Optionally, when the first threshold is less than or equal to 0, and the first transmission time is greater than the first threshold, the LBT is enabled.

Optionally, when the first threshold is greater than the transmission period, and the first transmission time is less than or equal to the first threshold, the LBT is not enabled.

For example, the first threshold may be based on definition of a regulation department, and may be different in different countries and regions. Alternatively, the first threshold may be negotiated by the first device and the second device. Alternatively, the first threshold may be defined by the first device and notified to the second device. For example, the access point defines the first threshold and notifies each STA of the first threshold. Alternatively, the first threshold may be defined by the second device and notified to the first device. A manner of determining the first threshold is not limited in this embodiment of this application.

Optionally, when whether to perform the LBT or not is determined based on the first duty cycle, the LBT is enabled if the first duty cycle is greater than or equal to a second threshold; or the LBT is not enabled if the first duty cycle is less than the second threshold.

Alternatively, optionally, the LBT is enabled if the first duty cycle is greater than the second threshold; or the LBT is not enabled if the first duty cycle is less than or equal to the second threshold. This embodiment of this application does not impose any limitation on whether the LBT is enabled or not when the first duty cycle is equal to the second threshold.

It should be understood that the second threshold may be the same or different for different frequency bands (for example, the UNII-3 and the UNII-5). For example, a range of the second threshold is from 0 to 1. Alternatively, the range of the second threshold may be less than or equal to 0. Alternatively, the range of the second threshold may be greater than or equal to 1.

For a case in which the LBT is enabled when the first duty cycle is equal to the second threshold, the following manners may be specifically used.

Optionally, when the second threshold is less than or equal to 0, and the first duty cycle is greater than or equal to the second threshold, the LBT is enabled.

Optionally, when the second threshold is greater than 1, and the first duty cycle is less than the second threshold, the LBT is not enabled.

For a case in which the LBT is not enabled when the first duty cycle is equal to the second threshold, the following manners may be specifically used.

Optionally, when the second threshold is less than or equal to 0, and the first duty cycle is greater than the second threshold, the LBT is enabled.

Optionally, when the second threshold is greater than 0, and the first duty cycle is less than or equal to the second threshold, the LBT is not enabled.

It should be understood that a manner of determining the second threshold is similar to that of determining the first threshold. Details are not described herein again.

In a possible implementation, a type of the transmission period includes any one of the following: a ranging round, a sensing round, a total interval applied to a ranging scenario, a total interval applied to a sensing scenario, a duration of a ranging block, a duration of a sensing block, or a duration of a hyper block. The total interval applied to the ranging scenario includes the ranging round and a non-ranging round, and the total interval applied to the sensing scenario includes the sensing round and the non-sensing round. The duration of the ranging block includes a ranging round of a first user and a non-ranging round of the first user, and the duration of the sensing block includes a sensing round of the first user and a non-sensing round of the first user. The duration of the hyper block includes a duration of one or more ranging blocks, or the duration of the hyper block includes a duration of one or more sensing blocks.

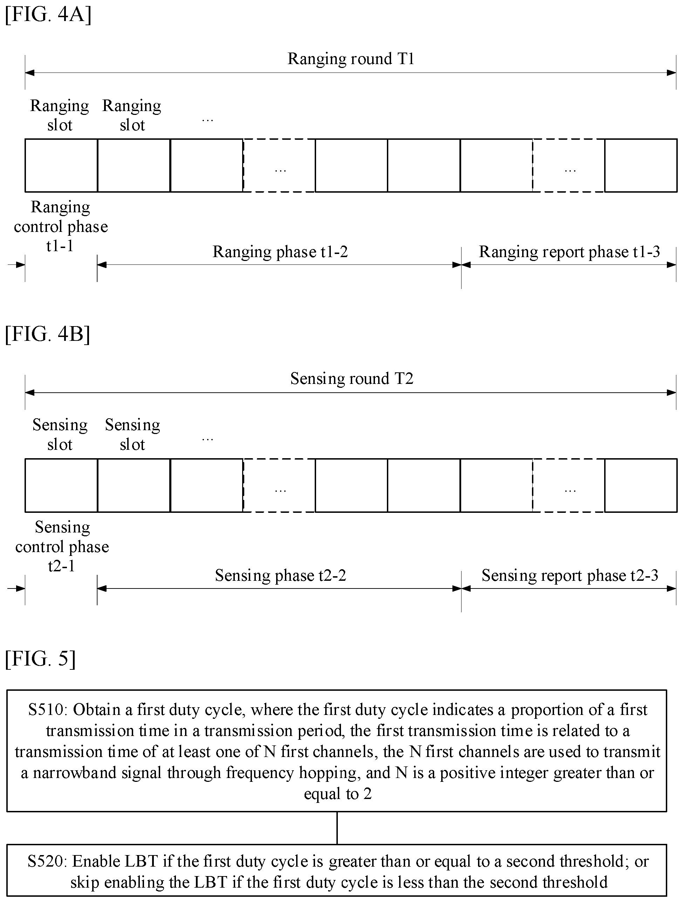

The transmission period may be a predefined duration, for example, 100 milliseconds, 1 second, or 100 seconds. A specific value of the transmission period is not limited in this embodiment of this application. FIG. 4A and FIG. 4B are diagrams of the transmission time and the transmission period according to an embodiment of this application. Scenarios shown in FIG. 4A and FIG. 4B are two specific examples of UWB narrowband transmission. FIG. 4A shows a ranging scenario, and FIG. 4B shows a sensing scenario.

For example, as shown in FIG. 4A, in the ranging scenario, the transmission period may be referred to as a ranging round (ranging round), and is denoted as T1, where narrowband transmission is used in a ranging control phase (denoted as t1-1) and a ranging report phase (denoted as t1-3). Different phases may include one or more ranging slots (ranging slots). The first transmission time is determined based on a transmission time of at least one of the N first channels corresponding to the ranging control phase (denoted as t1-1) and the ranging report phase (denoted as t1-3). Then, the first transmission time is compared with a predefined first threshold to determine whether to perform the LBT.

The ranging round T1 includes the ranging control phase (control phase, denoted as t1-1), a ranging phase (ranging phase, denoted as t1-2), and the ranging report phase (report phase, denoted as t1-3). In the ranging phase t1-2, ultra-wideband (ultra-wideband, UWB) transmission is used.

It should be understood that, because the ranging control phase t1-1 shown in FIG. 4A is relatively fixed, the first transmission time may be determined based on a transmission time of at least one of the N first channels in frequency domain in the ranging report phase t1-3 in FIG. 4A.

For example, as shown in FIG. 4B, in the sensing scenario, the transmission period may be referred to as a sensing round (sensing round), and is denoted as T2, where narrowband transmission is used in a sensing control phase (denoted as t2-1) and a sensing report phase (denoted as t2-3). Different phases may include one or more sensing slots (sensing slots). The first transmission time is determined based on a transmission time of at least one of the N first channels corresponding to the sensing control phase (denoted as t2-1) and the sensing report phase (denoted as t2-3). Then, the first transmission time is compared with a predefined first threshold to determine whether to perform the LBT.

The ranging round T1 includes the sensing control phase (control phase, denoted as t2-1), a sensing phase (sensing phase, denoted as t2-2), and the sensing report phase (report phase, denoted as t2-3). In the sensing phase t2-2, UWB transmission is used.

It should be understood that the first transmission time is less than or equal to a duration corresponding to the ranging report phase t1-3, or the first transmission time is less than or equal to a duration corresponding to the ranging control phase t1-1 and the ranging report phase t1-3.

In a possible implementation, in the ranging report phase t1-3, after transmitting a report, the first device may further transmit data through narrowband. The first transmission time may include a transmission duration corresponding to transmission of data through the narrowband in the ranging report phase t1-3.

It should be understood that, because the sensing control phase t2-1 shown in FIG. 4B is relatively fixed, the first transmission time may be determined based on a transmission time of at least one of the N first channels in frequency domain in the sensing report phase t2-3 in FIG. 4B.

It should be understood that the first transmission time is less than or equal to a duration corresponding to the sensing report phase t2-3, or the first transmission time is less than or equal to a duration corresponding to the sensing control phase t2-1 and the sensing report phase t2-3.

In a possible implementation, in the sensing report phase t2-3, after transmitting a report, the first device may further transmit data through narrowband. The first transmission time may include a transmission duration corresponding to transmission of data through the narrowband in the sensing report phase t2-3.

It should be further understood that a specific quantity of the first channels in frequency domain is not completely shown in FIG. 4A and FIG. 4B. Herein, only one first channel is used as an example for description. In addition, FIG. 4A and FIG. 4B are merely examples of a UBW narrowband transmission scenario. In another scenario, for example, in a Bluetooth transmission mode or a Bluetooth low energy transmission mode, the transmission period may alternatively be in another form. This is not limited in this embodiment of this application.

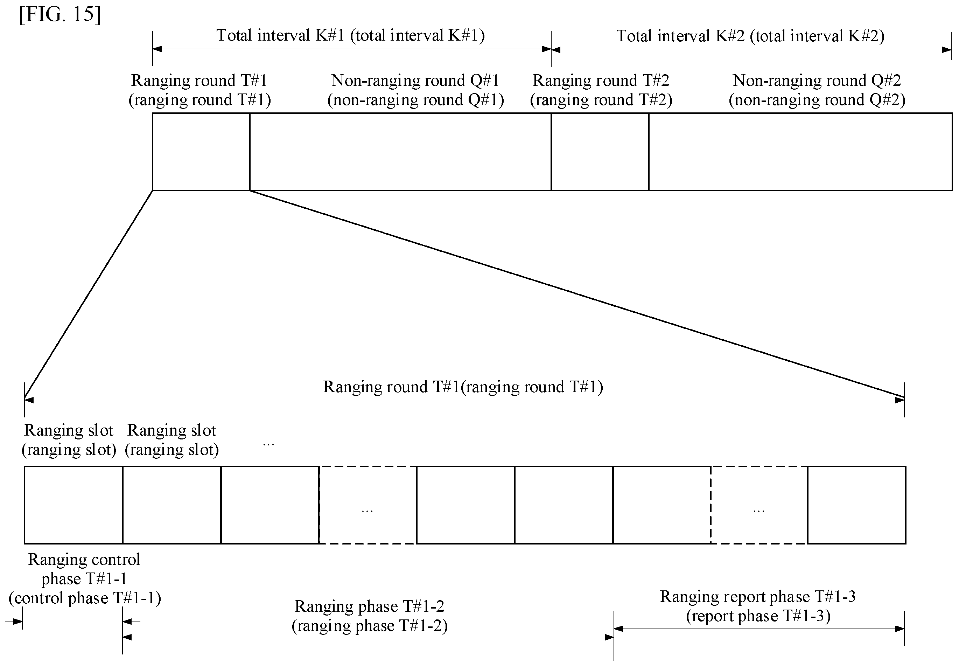

It should be understood that the transmission period may be the ranging round shown in FIG. 4A, or the transmission period may be the sensing round shown in FIG. 4B. The type of the transmission period may alternatively be another type. The following uses FIG. 15 to FIG. 17 as examples for description. The type of the transmission period includes but is not limited to types provided in this embodiment of this application.

FIG. 15 is a diagram of the transmission period according to an embodiment of this application.

The transmission period may be a total interval (total interval). The total interval may include a ranging round (ranging round) and a non-ranging round (non-ranging round).

For example, as shown in FIG. 15, the transmission period may be a total interval K#1 or a total interval K#2. The total interval K#1 includes a ranging round T#1 and a non-ranging round Q#1. The total interval K#2 includes a ranging round T#2 and a non-ranging round Q#2. A duration of the total interval K#1 may be the same as or different from a duration of the total interval K#2.

For exemplary descriptions of the ranging round T#1, refer to the ranging round T1 in FIG. 4A. Details are not described herein again.

It should be understood that the ranging round may be a duration for which the first device performs ranging, and the non-ranging round may be a duration for which the first device does not perform ranging. Alternatively, the ranging round is relative to a user. For example, as shown in FIG. 15, the ranging round T#1 is a ranging round of a user #1, and the non-ranging round Q#1 may be a non-ranging round of the user #1. In other words, for the transmission period shown in FIG. 15, a duration corresponding to the transmission period is a duration between a start time point of the ranging round T#1 of the user #1 and a start time point of the ranging round T#2.

Optionally, the transmission period may further be a total interval applied to a sensing scenario. The total interval applied to the sensing scenario includes a sensing round (sensing round) and a non-sensing round (non-sensing round).

It should be understood that the sensing round may be a duration for which the first device performs sensing, and the non-sensing round may be a duration for which the first device does not perform sensing. The sensing round is relative to the user. For example, the sensing round #1 is a sensing round of the user #1, and the non-sensing round #1 may be a non-sensing round of the user #1.

It should be further understood that durations of different total intervals applied to the sensing scenario may be the same or may be different. The sensing round #1 is the same as the sensing round T2. For detailed descriptions, refer to FIG. 4B. Details are not described herein again.

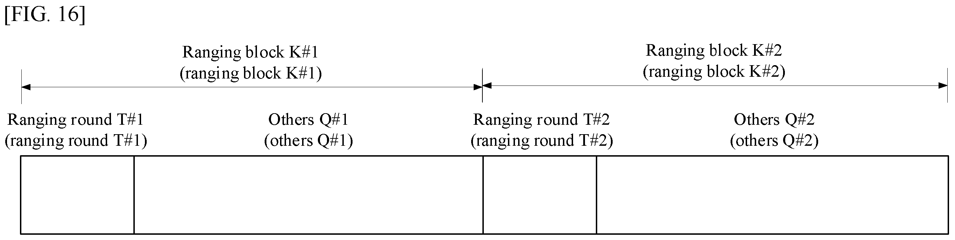

FIG. 16 is a diagram of another transmission period according to an embodiment of this application.

The transmission period may be a duration of a ranging block (ranging block). The duration of the ranging block may include a ranging round (ranging round) and other durations (others). The other durations may be durations for which the first device does not perform ranging, or may be ranging rounds of other users. The duration of the ranging block may also be referred to as a ranging block duration (ranging block duration).

For example, as shown in FIG. 16, the transmission period may be a duration of a ranging block K#1 or a duration of a ranging block K#2. The duration of the ranging block K#1 includes a ranging round T#1 and another Q#1. The duration of the ranging block K#2 includes a ranging round T#2 and another Q#2. The duration of the ranging block K#1 may be the same as or different from the duration of the ranging block K#2.

The ranging round T#1 is the same as the ranging round T1, and the ranging round T#1 is another name of the ranging round T1. For detailed content, refer to FIG. 4A. Details are not described herein again.

Optionally, the transmission period may further be a duration of a sensing block (sensing block) applied to a sensing scenario. The duration of the sensing block may include a sensing round (sensing round) and other durations (others). The other durations are durations for which the first device does not perform sensing, or may be sensing rounds of other users. The duration of the sensing block may also be referred to as a sensing block duration (sensing block duration).

The sensing round is the same as the sensing round T2. For detailed descriptions, refer to FIG. 4B. Details are not described herein again.

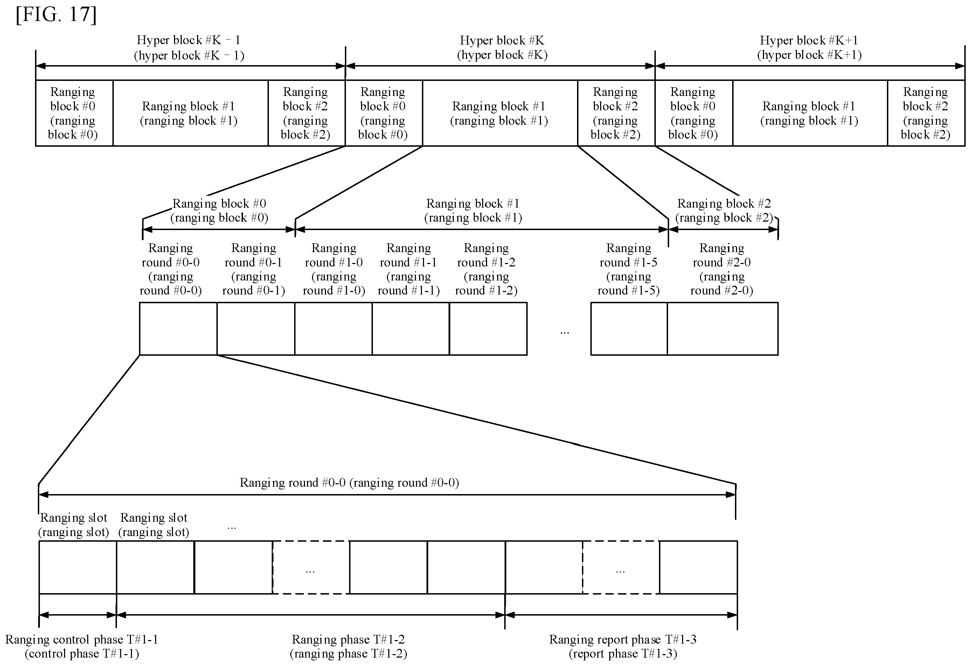

FIG. 17 is a diagram of another transmission period according to an embodiment of this application.

The transmission period may be a duration of a hyper block (hyper block). The duration of the hyper block may include a duration of one or more ranging blocks (ranging blocks), and a duration of one ranging block may include one or more ranging rounds (ranging rounds).

It should be understood that a quantity of hyper blocks and a duration of each hyper block are not limited in this embodiment of this application.

It should be further understood that a quantity of ranging blocks included in one hyper block and a duration of each ranging block are not limited in this embodiment of this application. In addition, a quantity of ranging rounds included in a duration of one ranging block and a duration of each ranging round are not limited in this embodiment of this application.

For example, as shown in FIG. 17, a duration of a hyper block #K includes a duration of a ranging block #0, a duration of a ranging block #1, and a duration of a ranging block #2. The duration of the ranging block #0 includes a ranging round #0-0 and a ranging round #0-1. The duration of the ranging block #1 includes a ranging round #1-0, a ranging round #1-1, a ranging round #1-2, a ranging round #1-3, a ranging round #1-4, and a ranging round #1-5. The duration of the ranging block #2 includes a ranging round #2-0. Durations of different ranging blocks may be the same or may be different, and different ranging rounds may be the same or may be different.

It should be understood that the ranging round #0-0 in the duration of the ranging block #0 is a ranging round of the user #1, and the ranging round #0-1 is a ranging round of another user. Therefore, the ranging round #0-1 may also be referred to as a non-ranging round of the user #1.

One ranging round in FIG. 17 is the same as the ranging round T1. For detailed content, refer to FIG. 4A. Details are not described herein again.

Optionally, the hyper block may further include a duration of one or more sensing blocks (sensing blocks), and a duration of one sensing block may include one or more sensing rounds (sensing rounds).

It should be understood that a quantity of hyper blocks and a duration of each hyper block are not limited in this embodiment of this application.

It should be further understood that a quantity of sensing blocks included in one hyper block and a duration of each sensing block are not limited in this embodiment of this application. In addition, a quantity of sensing rounds included in a duration of one sensing block and a duration of each sensing round are not limited in this embodiment of this application.

In a possible implementation, different transmission periods may correspond to a first threshold of a same scale, or different transmission periods may correspond to a second threshold of a same scale.

In a possible implementation, different transmission periods correspond to first thresholds of different scales, or different transmission periods correspond to second thresholds of different scales.

In some implementations, a first transmission period corresponds to a first threshold of a first scale, a second transmission period corresponds to a first threshold of a second scale, and if a duration of the first transmission period is less than a duration of the second transmission period, the first threshold of the first scale is greater than the first threshold of the second scale.

For example, if the first transmission period is a ranging round, the first threshold of the first scale is used; and if the second transmission period is a total interval, the first threshold of the second scale is used. The first threshold of the first scale may be greater than the first threshold of the second scale.

For example, if a fixed duration is used for the transmission period, and the first transmission period is 100 ms, the first threshold of the first scale is used; and if the second transmission period is 1s, the first threshold of the second scale is used. The first threshold of the first scale is greater than the first threshold of the second scale.

In some implementations, a first transmission period corresponds to a second threshold of a third scale, a second transmission period corresponds to a second threshold of a fourth scale, and if a duration of the first transmission period is less than a duration of the second transmission period, the second threshold of the third scale is greater than the second threshold of the fourth scale.

For example, if the first transmission period is a ranging round, the second threshold of the third scale is used; and if the second transmission period is a total interval, the second threshold of the fourth scale is used. The second threshold of the third scale may be greater than the second threshold of the fourth scale. For example, the second threshold of the third scale may be 10%, and the second threshold of the fourth scale may be 5%.

For example, if a fixed duration is used for the transmission period, and the first transmission period is 100 ms, the second threshold of the third scale is used; and if the second transmission period is 1s, the second threshold of the fourth scale is used. The second threshold of the third scale is greater than the second threshold of the fourth scale.

In this way, if the transmission period is short, some narrowband signals on which LBT is not performed may be allowed to be transmitted within the short transmission period. If the transmission period is long, it may be ensured that a narrowband transmission proportion is low within the long transmission period, thereby reducing overall interference to WLAN signal transmission.

In a possible implementation, when the first transmission time is an average value, a median, or a mode of N second transmission times, if the first transmission time is greater than or equal to the first threshold, the LBT is enabled for the N first channels. If the first transmission time is less than the first threshold, the LBT is not enabled for the N first channels.

For example, in FIG. 4A, the first transmission time may include an averaging result of the N second transmission times corresponding to the N first channels in frequency domain in the ranging control phase and the ranging report phase.

For example, in FIG. 4B, the first transmission time may include an averaging result of the N second transmission times corresponding to the N first channels in frequency domain in the sensing control phase and the sensing report phase.

In this way, in a frequency hopping scenario, because the first transmission time indicates an averaging status of the N second transmission times of the N first channels, whether the LBT is performed for the N first channels may be determined only by comparing the first transmission time with the first threshold. In this manner, coexistence of narrowband transmission and WLAN transmission can be achieved, and a quantity of times that a first device having a narrowband communication capability performs the LBT is reduced without increasing interference, thereby reducing a delay of narrowband signal transmission. In addition, the first transmission time may be an average value of transmission times corresponding to the N first channels. A unified determining manner can reduce calculation complexity, and is easier to implement.

In a possible implementation, when the first transmission time includes a transmission time of the narrowband signal on an n^{th} first channel when the first device performs frequency hopping to the n^{th} first channel, if the first transmission time is greater than or equal to the first threshold, the LBT is enabled for the n^{th} first channel. If the first transmission time is less than the first threshold, the LBT is not enabled for the n^{th} first channel, where 1≤n≤N, and n is a positive integer.

For example, in FIG. 4A, the first transmission time may include a transmission time corresponding to the n^{th} first channel in frequency domain in the ranging control phase t1-1 and the ranging report phase t1-3.

For example, in FIG. 4B, the first transmission time may include a transmission time corresponding to the n^{th} first channel in frequency domain in the sensing control phase t2-1 and the sensing report phase t2-3.

In this way, in a frequency hopping scenario, whether to perform the LBT for the first channel is determined based on a transmission time of any one of the N first channels for transmitting a narrowband signal. Coexistence of narrowband transmission and WLAN transmission is achieved, and a quantity of times that a first device having a narrowband communication capability performs the LBT is reduced without increasing interference, so that a throughput of narrowband signal transmission on the first channel is increased in a more targeted and accurate manner, and a delay of narrowband signal transmission on the first channel is reduced.

In a possible implementation, when the first transmission time includes a transmission time of the narrowband signal on some or all of the first channels corresponding to a first BSS operation bandwidth in the N first channels, if the first transmission time is greater than or equal to the first threshold, the LBT is enabled for the some or all of the first channels. If the first transmission time is less than the first threshold, the LBT is not enabled for the some or all of the first channels.

For example, in FIG. 4A, the first transmission time includes transmission times of the some or all of the first channels, which may correspond to first channels in frequency domain for the ranging control phase t1-1 and the ranging report phase t1-3.

For example, in FIG. 4B, the first transmission time includes transmission times of the some or all of the first channels, which may correspond to first channels in frequency domain for the sensing control phase t2-1 and the sensing report phase t2-3.

In this way, in a frequency hopping scenario, when the first device can sense a first BSS operation bandwidth of a BSS in which the first device is located, the transmission time for transmitting the narrowband signal on the some or all of the first channels corresponding to the first BSS operation bandwidth is compared with the first threshold, to determine whether to enable the LBT. In this way, interference from narrowband signal transmission to the BSS can be determined in a more targeted manner. Consequently, coexistence of narrowband transmission and WLAN transmission is achieved, and a quantity of times that a first device having a narrowband communication capability performs the LBT is reduced without increasing interference, so that a throughput of narrowband signal transmission on a channel on which frequency domain resources overlap is increased more accurately, and a delay of narrowband signal transmission is reduced.

In a possible implementation, when an n^{th} first transmission time is determined based on a transmission time of an n^{th} first channel corresponding to an n^{th} second BSS operation bandwidth, if the n^{th} first transmission time is greater than or equal to the first threshold, the LBT is enabled for the n^{th} first channel. If the n^{th} first transmission time is less than the first threshold, the LBT is not enabled for the n^{th} first channel.

For example, in FIG. 4A, the n^{th} first transmission time may correspond to an n^{th} first channel in frequency domain for the ranging control phase t1-1 and the ranging report phase t1-3.

For example, in FIG. 4B, the n^{th} first transmission time may correspond to an n^{th} first channel in frequency domain for the sensing control phase t2-1 and the sensing report phase t2-3.

In this way, in a frequency hopping scenario, BSS operation bandwidths corresponding to different BSSs of different first channels are sensed, and different transmission times of the different first channels are compared with the first threshold, to determine whether to enable the LBT. In this way, interference that may be caused by narrowband signal transmission to different BSSs in WLAN transmission can be more accurately learned in advance across an entire frequency band. Consequently, coexistence of narrowband transmission and WLAN transmission is achieved, and a quantity of times that a first device having a narrowband communication capability performs the LBT is reduced without increasing interference, so that a throughput of narrowband signal transmission is further comprehensively increased in a more accurate and targeted manner, and a delay of narrowband signal transmission is reduced.

In the foregoing technical solution, in a frequency hopping scenario, a dwell time of the narrowband signal on different channels becomes shorter, and interference to WLAN transmission is reduced. Compared with continuing to use a total transmission time for sending the narrowband signal in a transmission period to determine whether to perform the LBT, that is, use a transmission time at a device-level granularity to determine whether to perform the LBT, the first transmission time in the solution of this application is related to a transmission time of at least one of the N first channels. In this way, coexistence of narrowband transmission and WLAN transmission can be achieved, and a quantity of times that a first device having a narrowband communication capability performs the LBT is reduced without increasing interference, thereby reducing a delay of narrowband signal transmission and increasing a throughput of narrowband signal transmission.

FIG. 5 is a schematic flowchart of another communication method according to an embodiment of this application. It may be understood that the first device or the second device may perform the communication method, but an execution body is not limited in this application. For a detailed explanation of the execution body, refer to related descriptions in FIG. 3. Details are not described herein again.

S510: Obtain a first duty cycle, where the first duty cycle indicates a proportion of a first transmission time in a transmission period, the first transmission time is related to a transmission time of at least one of N first channels, the N first channels are used to transmit a narrowband signal through frequency hopping, and N is a positive integer greater than or equal to 2.

It should be understood that the first duty cycle may be directly obtained, or may be obtained based on the first transmission time and the transmission period. This is not limited in this embodiment of this application.

It should be understood that for an explanation of the first transmission time, refer to related explanations in S310. Details are not described herein again. For explanations of the transmission period, refer to related explanations in S320. Details are not described herein again.

In a possible implementation, N second duty cycles corresponding to the N first channels are obtained. An n^{th} second duty cycle indicates a proportion of an n^{th} second transmission time in the transmission period, and the first duty cycle is an average value of the N second duty cycles.

Optionally, the first duty cycle may alternatively be a median or a mode of the N second duty cycles.

It should be understood that the first duty cycle weakens a difference among the N second duty cycles corresponding to the N first channels. Specifically, an average value, a median, or a mode of the N second duty cycles is selected as the first duty cycle. This is not limited in this application.

In a possible implementation, the first duty cycle includes a duty cycle corresponding to transmission of the narrowband signal on the n^{th} first channel when the first device performs frequency hopping to the n^{th} first channel, 1≤n≤N, and n is a positive integer.

It should be understood that related explanations of the first duty cycle in a scenario in which the first device performs frequency hopping to the n^{th} first channel are similar to those in a scenario in which the first device performs frequency hopping to the n^{th} first channel in S310. Details are not described herein again.

Optionally, a value of a bandwidth corresponding to each of the N first channels may be one of 20 MHz, 40 MHz, 80 MHz, 160 MHz, 240 MHz, 320 MHz, 480 MHz, or 640 MHz. This is not limited in this embodiment of this application.

In a possible implementation, a first BSS operation bandwidth corresponding to a basic service set BSS in which a first device is located is obtained. The first duty cycle includes a duty cycle corresponding to transmission of the narrowband signal on some or all of the first channels corresponding to the first BSS operation bandwidth in the N first channels.

It should be understood that for related explanations of the some or all of the first channels corresponding to the first BSS operation bandwidth, refer to a corresponding part in S310. Details are not described herein again.

In other words, the first duty cycle includes a duty cycle corresponding to transmission times of the some or all of the first channels on which WLAN transmission and narrowband signal transmission overlap.

In a possible implementation, an n^{th} second BSS operation bandwidth corresponding to an n^{th} first channel is obtained, where 1≤n≤N, and n is a positive integer. An n^{th} first duty cycle corresponding to a transmission time for transmitting the narrowband signal on the n^{th} first channel is obtained based on the n^{th} second BSS operation bandwidth.

It should be understood that the first device has both a WLAN communication capability and a narrowband transmission communication capability, and the first device has a capability of supporting BSS operation bandwidths corresponding to different BSSs on different first channels within a given frequency band.

It should be further understood that for related explanations of the second BSS operation bandwidth, refer to a related part in S310. Details are not described herein again.

Optionally, the first transmission time is obtained based on the first duty cycle.

S520: Enable LBT if the first duty cycle is greater than or equal to a second threshold; or skip enabling the LBT if the first duty cycle is less than the second threshold.

Optionally, if the first duty cycle is greater than the second threshold, the LBT is enabled. If the first duty cycle is less than or equal to the second threshold, the LBT is not enabled.

It should be understood that this embodiment of this application does not impose any limitation on whether the LBT is enabled or not when the first duty cycle is equal to the second threshold.

Optionally, when whether to perform the LBT or not is determined based on the first transmission time, the LBT is enabled if the first transmission time is greater than or equal to a first threshold. If the first transmission time is less than the first threshold, the LBT is not enabled.

Alternatively, optionally, if the first transmission time is greater than the first threshold, the LBT is enabled. If the first transmission time is less than or equal to the first threshold, the LBT is not enabled. This embodiment of this application does not impose any limitation on whether the LBT is enabled or not when the first transmission time is equal to the first threshold.

It should be understood that for related explanations of the first threshold, the second threshold, and the transmission period, refer to a related part in S320. Details are not described herein again.

In a possible implementation, when the first duty cycle is an average value, a median, or a mode of the N second duty cycles, if the first duty cycle is greater than or equal to the second threshold, the LBT is enabled for the N first channels. If the first duty cycle is less than the second threshold, the LBT is not enabled for the N first channels.

In this way, in a frequency hopping scenario, because the first duty cycle indicates an averaging status of the N second duty cycles of the N first channels, whether the LBT is performed for the N first channels may be determined only by comparing the first duty cycle with the second threshold. In this manner, coexistence of narrowband transmission and WLAN transmission is achieved, and a quantity of times that a first device having a narrowband communication capability performs the LBT is reduced without increasing interference, thereby reducing a delay of narrowband signal transmission. A unified determining manner can reduce calculation complexity, and is easier to implement. In addition, based on different transmission periods, a unified second threshold may be used to reduce a quantity of times of configuring the second threshold, thereby further reducing implementation complexity.

In a possible implementation, when the first duty cycle includes a duty cycle corresponding to transmission of the narrowband signal on the n^{th} first channel when the first device performs frequency hopping to the n^{th} first channel, if the first duty cycle is greater than or equal to the second threshold, the LBT is enabled for the n^{th} first channel. If the first duty cycle is less than the second threshold, the LBT is not enabled for the n^{th} first channel, where 1≤n≤N, and n is a positive integer.

In this way, in a frequency hopping scenario, whether to perform the LBT for the first channel is determined based on a duty cycle of any one of the N first channels for transmitting a narrowband signal. In this manner, coexistence of narrowband transmission and WLAN transmission is achieved, and a quantity of times that a first device having a narrowband communication capability performs the LBT is reduced without increasing interference, so that a throughput of narrowband signal transmission on the first channel is increased in a more targeted and accurate manner, and a delay of narrowband signal transmission on the first channel is reduced. In addition, based on different transmission periods, a unified second threshold may be used to reduce a quantity of times of configuring the second threshold, thereby further reducing implementation complexity.

In a possible implementation, when the first duty cycle includes a duty cycle corresponding to transmission of the narrowband signal on some or all of the first channels corresponding to the first BSS operation bandwidth in the N first channels, if the first duty cycle is greater than or equal to the second threshold, the LBT is enabled for the some or all of the first channels. If the first duty cycle is less than the second threshold, the LBT is not enabled for the some or all of the first channels.

In this way, in a frequency hopping scenario, when the first device can sense a first BSS operation bandwidth of a BSS in which the first device is located, the first duty cycle for transmitting the narrowband signal on the some or all of the first channels corresponding to the first BSS operation bandwidth is compared with the first threshold, to determine whether to enable the LBT. In this manner, interference from narrowband signal transmission to the BSS can be determined in a more targeted manner. Consequently, coexistence of narrowband transmission and WLAN transmission is achieved, and a quantity of times that a first device having a narrowband communication capability performs the LBT is reduced without increasing interference, so that a throughput of narrowband signal transmission on a channel on which frequency domain resources overlap can also be increased more accurately, and a delay of narrowband signal transmission is reduced. In addition, based on different transmission periods, a unified second threshold may be used to reduce a quantity of times of configuring the second threshold, thereby further reducing implementation complexity.

In a possible implementation, when an n^{th} first duty cycle is determined based on a duty cycle of an n^{th} first channel corresponding to an n^{th} second BSS operation bandwidth, if the n^{th} first duty cycle is greater than or equal to the second threshold, the LBT is enabled for the n^{th} first channel. If the n^{th} first duty cycle is less than the second threshold, the LBT is not enabled for the n^{th} first channel.

In this way, in a frequency hopping scenario, BSS operation bandwidths corresponding to different BSSs of different first channels are sensed, and different duty cycles of the different first channels are compared with the first threshold, to determine whether to enable the LBT. In this way, interference that may be caused by narrowband signal transmission to different BSSs in WLAN transmission can be more accurately learned in advance across an entire frequency band. In this manner, coexistence of narrowband transmission and WLAN transmission can be achieved, and a quantity of times that a first device having a narrowband communication capability performs the LBT is reduced without increasing interference, so that a throughput of narrowband signal transmission is further increased in a more targeted and accurate manner, and a delay of narrowband signal transmission is reduced. In addition, based on different transmission periods, a unified second threshold may be used to reduce a quantity of times of configuring the second threshold, thereby further reducing implementation complexity.

In the foregoing technical solution, in a frequency hopping scenario, a dwell time of the narrowband signal on different channels becomes shorter, and interference to WLAN transmission is reduced. Compared with continuing to use a total duty cycle for sending the narrowband signal in a transmission period to determine whether to perform the LBT, that is, use a duty cycle at a device-level granularity to determine whether to perform the LBT, the first duty cycle in the solution of this application is related to a duty cycle of at least one of the N first channels. In this way, not only coexistence of narrowband transmission and WLAN transmission can be achieved, but also a quantity of times that a first device having a narrowband communication capability performs the LBT is reduced without increasing interference, thereby reducing a delay of narrowband signal transmission and increasing a throughput of narrowband signal transmission. In addition, based on different transmission periods, a unified second threshold may be used to reduce a quantity of times of configuring the second threshold, thereby further reducing implementation complexity.

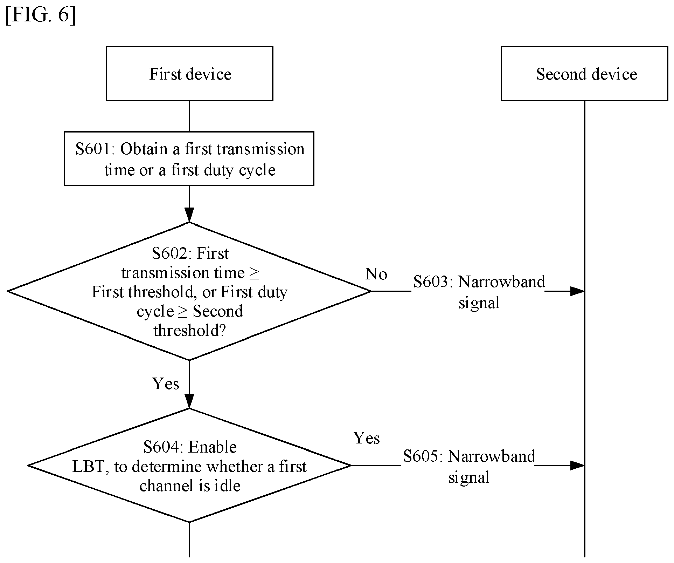

FIG. 6 is an interaction diagram of a communication method according to an embodiment of this application. It may be understood that a first device and a second device are used as examples for performing the interaction diagram of the communication method. For related explanations of the first device and the second device that are used as the execution bodies, refer to FIG. 3. Details are not described herein again.

S601: The first device obtains a first transmission time, or the first device obtains a first duty cycle.

It should be understood that for detailed explanations of the first transmission time and the first duty cycle, refer to S310 and S410 respectively. Details are not described herein again.

S602: The first device determines whether the first transmission time is greater than or equal to a first threshold, or whether the first duty cycle is greater than or equal to a second threshold.

Optionally, the first device determines whether the first transmission time is greater than the first threshold, or whether the first duty cycle is greater than the second threshold.

It should be understood that for related explanations of the first threshold and the second threshold, refer to S320. Details are not described herein again.

If the first transmission time is less than the first threshold, or the first duty cycle is less than the second threshold, the first device does not enable LBT. In S603, the first device transmits a narrowband signal on N first channels through frequency hopping.

If the first transmission time is greater than or equal to the first threshold, or the first duty cycle is greater than or equal to the second threshold, in S604, the first device enables the LBT, to determine whether at least one of the N first channels is idle.

Optionally, if the first transmission time is less than or equal to the first threshold, or the first duty cycle is less than or equal to the second threshold, the LBT is not enabled, in S603, the first device transmits a narrowband signal on N first channels through frequency hopping.

Optionally, if the first transmission time is greater than the first threshold, or the first duty cycle is greater than the second threshold, in S604, the first device enables the LBT, to determine whether at least one of the N first channels is idle.

If the at least one of the N first channels is idle, in S605, the first device transmits a narrowband signal on the at least one of the N first channels through frequency hopping.

In a possible implementation, when the first transmission time is an average value, a median, or a mode of N second transmission times, or when the first duty cycle is an average value, a median, or a mode of N second duty cycles, the first device transmits the narrowband signal on the N first channels through frequency hopping.

In a possible implementation, when the first transmission time includes a transmission time of the narrowband signal on an n^{th} first channel when the first device performs frequency hopping to the n^{th} first channel, or when the first duty cycle includes a duty cycle corresponding to transmission of the narrowband signal on the n^{th} first channel when the first device performs frequency hopping to the n^{th} first channel, the first device transmits the narrowband signal on the n^{th} first channel through frequency hopping.

In a possible implementation, when the first transmission time includes a transmission time of the narrowband signal on some or all of the first channels corresponding to a first BSS operation bandwidth in the N first channels, or when the first duty cycle includes a duty cycle corresponding to transmission of the narrowband signal on some or all of the first channels corresponding to the first BSS operation bandwidth in the N first channels, the first device transmits the narrowband signal on the some or all of the first channels through frequency hopping.

In a possible implementation, when an n^{th} first transmission time is determined based on a transmission time of an n^{th} first channel corresponding to an n^{th} second BSS operation bandwidth, or when an n^{th} first duty cycle is determined based on a duty cycle of an n^{th} first channel corresponding to an n^{th} second BSS operation bandwidth, the first device transmits the narrowband signal on the n^{th} first channel through frequency hopping.

Optionally, if the at least one of the N first channels is busy, the first device does not transmit the narrowband signal.

The following describes in detail specific forms of the first transmission time and the first duty cycle with reference to FIG. 7A to FIG. 10B.

FIG. 7A and FIG. 7B are diagrams of the first transmission time according to an embodiment of this application. The first device corresponding to the first transmission time shown in FIG. 7A and FIG. 7B has a narrowband communication capability. The first transmission time indicates an average value, a median, or a mode of N second transmission times. The first duty cycle indicates an average value, a median, or a mode of N second duty cycles.

FIG. 7A shows a spectrum of 125 MHz in total in a UNII-3 frequency band. If the narrowband signal is carried on an entire UNII-3 frequency band, assuming that a bandwidth value of each of the N first channels is 20 MHz, the first transmission time may be an average value, a median, or a mode of six second transmission times corresponding to six 20 MHz first channels.

That is, assuming that a value of a BSS operation bandwidth of WLAN transmission is 20 MHz, an averaged first transmission time corresponding to the six 20 MHz first channels can be obtained, and the averaged first transmission time is compared with the first threshold, to determine whether to perform the LBT for the six 20 MHz first channels.

For another example, if the narrowband signal is carried on an entire UNII-3 frequency band, assuming that a bandwidth value of each of the N first channels is 40 MHz, the first transmission time may be an average value, a median, or a mode of three second transmission times corresponding to three 40 MHz first channels.

That is, assuming that a value of a BSS operation bandwidth of WLAN transmission is 40 MHz, an averaged first transmission time corresponding to the three 40 MHz first channels can be obtained, and the averaged first transmission time is compared with the first threshold, to determine whether to perform the LBT for the three 40 MHz first channels.

It should be understood that the second duty cycle indicates a proportion of the second transmission time in a transmission period, and the first duty cycle indicates a proportion of the first transmission time in the transmission period. Therefore, the first duty cycle may be determined based on the first transmission time and the transmission period, and the second duty cycle may be determined based on the second transmission time and the transmission period, which are not shown in FIG. 7A and FIG. 7B.

FIG. 7B shows a spectrum of 500 MHz in total in a UNII-5 frequency band. If the narrowband signal is carried on an entire UNII-5 frequency band, assuming that a bandwidth value of each of the N first channels is 80 MHz, the first transmission time may be an average value, a median, or a mode of six second transmission times corresponding to six 80 MHz first channels.

It should be understood that in the UNII-5 frequency band, there is a sufficient bandwidth, and 80 MHz is a common BSS operation bandwidth. Therefore, the first transmission time or the first duty cycle for the 80 MHz first channel is obtained. For a first channel whose bandwidth exceeds 20 MHz to obtain the first transmission time or the first duty cycle, for example, an 80 MHz first channel, considering that when a narrowband signal performs frequency hopping across different 20 MHz channels corresponding to one BSS operation bandwidth, interference may be caused to WLAN transmission on a first channel corresponding to the BSS operation bandwidth, this approach helps reduce interference from the narrowband signal to the BSS operation, and reduce a delay of narrowband signal transmission.

That is, assuming that a value of a BSS operation bandwidth of WLAN transmission is 80 MHz, an averaged first transmission time corresponding to the six 80 MHz first channels can be obtained, and the averaged first transmission time is compared with the first threshold, to determine whether to perform the LBT for the six 80 MHz first channels.

For another example, if the narrowband signal is carried on an entire UNII-5 frequency band, assuming that a bandwidth value of each of the N first channels is 40 MHz, the first transmission time may be an average value, a median, or a mode of twelve second transmission times corresponding to twelve 40 MHz first channels.

For another example, if the narrowband signal is carried on an entire UNII-5 frequency band, assuming that a bandwidth value of each of the N first channels is 20 MHz, the first transmission time may be an average value, a median, or a mode of twenty-five second transmission times corresponding to twenty-five 20 MHz first channels.

For another example, if the narrowband signal is carried on an entire UNII-5 frequency band, assuming that a bandwidth value of each of the N first channels is 160 MHz, the first transmission time may be an average value, a median, or a mode of three second transmission times corresponding to three 160 MHz first channels.

For another example, if the narrowband signal is carried on an entire UNII-5 frequency band, assuming that a bandwidth value of each of the N first channels is 320 MHz, the first transmission time may be an average value, a median, or a mode of two second transmission times corresponding to two 320 MHz first channels.

It should be understood that a manner of determining, based on the first transmission time or the first duty cycle, whether to perform the LBT may be separately performed in the UNII-3 frequency band and the UNII-5 frequency band. The two frequency bands may use a same bandwidth or different bandwidths. Alternatively, in the manner of determining, based on the first transmission time or the first duty cycle, whether to perform the LBT, a same bandwidth is used in the UNII-3 frequency band and the UNII-5 frequency band. Alternatively, in this embodiment of this application, the manner of determining, based on the first transmission time or the first duty cycle, whether to perform the LBT may be applied to only one of the UNII-3 frequency band and the UNII-5 frequency band. For example, in this embodiment of this application, the manner of determining, based on the first transmission time or the first duty cycle, whether to perform the LBT is applied only to the UNII-3 frequency band. Another aspect is used for the UNII-5 frequency band. For example, for the UNII-5 frequency band, a device-level duty cycle or a transmission time is used to determine whether to perform the LBT. For another example, the LBT is always performed in the UNII-5.

Optionally, assuming that probabilities of narrowband signal frequency hopping across different channels are approximately the same, a first transmission time corresponding to each first channel may be determined based on a transmission time for transmitting the narrowband signal by the first device, a bandwidth of the first channel, and a total bandwidth for transmitting the narrowband signal.

Specifically, the first transmission time of each first channel may be 1/m of the transmission time for transmitting the narrowband signal by the first device, and m is determined based on the bandwidth of the first channel and the total bandwidth for transmitting the narrowband signal. For example, m may be an integer result obtained after the total bandwidth/the bandwidth of the first channel is rounded off, or m may be a result obtained after the total bandwidth/the bandwidth of the first channel is rounded up, or m may be a result obtained after the total bandwidth/the bandwidth of the first channel is rounded down.

In this way, when probabilities of narrowband signal frequency hopping across different channels are approximately the same, calculation complexity can be further reduced, and a delay of narrowband signal transmission can be reduced.

Optionally, it is assumed that probabilities of narrowband signal frequency hopping across different channels are approximately the same, and a third transmission time is obtained. The third transmission time is a transmission time for transmitting the narrowband signal by the first device, that is, a device-level transmission time. If the third transmission time is greater than or equal to a third threshold, the LBT is enabled for the N first channels; or if the third transmission time is less than the third threshold, the LBT is not enabled for the N first channels. Alternatively, if the third transmission time is greater than the third threshold, the LBT is enabled for the N first channels; or if the third transmission time is less than or equal to the third threshold, the LBT is not enabled for the N first channels.

The third threshold may be m times a threshold in a non-frequency hopping scenario. For example, m may be an integer result obtained after the total bandwidth/the bandwidth of the first channel is rounded off, or m may be a result obtained after the total bandwidth/the bandwidth of the first channel is rounded up, or m may be a result obtained after the total bandwidth/the bandwidth of the first channel is rounded down.

FIG. 8A and FIG. 8B are diagrams of another first transmission time according to an embodiment of this application. The first device corresponding to the first transmission time shown in FIG. 8A and FIG. 8B has a narrowband communication capability. The first transmission time includes a transmission time of a narrowband signal on an n^{th} first channel when the first device performs frequency hopping to the n^{th} first channel. The first duty cycle includes a duty cycle corresponding to transmission of the narrowband signal on the n^{th} first channel when the first device performs frequency hopping to the n^{th} first channel, 1≤n≤N, and n is a positive integer.

FIG. 8A shows a spectrum of 125 MHz in total in a UNII-3 frequency band. It is assumed that a bandwidth of each of the N first channels is 20 MHz. If the first device performs frequency hopping to a 2^{nd} 20 MHz first channel, the first transmission time includes a 2^{nd} first transmission time of a narrowband signal on the 2^{nd} 20 MHz first channel.

That is, assuming that a value of a BSS operation bandwidth of WLAN transmission is 20 MHz, the first device performs frequency hopping to the 2^{nd} 20 MHz first channel, obtains the 2^{nd} first transmission time of the narrowband signal on the 2^{nd} 20 MHz first channel, and compares the 2^{nd} first transmission time with the first threshold, to determine whether to perform LBT for the 2^{nd} 20 MHz first channel. It should be understood that a first transmission time for each first channel having a bandwidth of 40 MHz is similar to that shown in FIG. 8A.

It should be understood that the second duty cycle indicates a proportion of the second transmission time in a transmission period, and the first duty cycle indicates a proportion of the first transmission time in the transmission period. Therefore, the first duty cycle may be determined based on the first transmission time and the transmission period, and the second duty cycle may be determined based on the second transmission time and the transmission period, which are not shown in FIG. 8A and FIG. 8B.

FIG. 8B shows a spectrum of 500 MHz in total in a UNII-5 frequency band. It is assumed that a bandwidth of each of the N first channels is 80 MHz. If the first device performs frequency hopping to a 3^{rd} 80 MHz first channel, the first transmission time includes a 3^{rd} first transmission time of a narrowband signal on the 3^{rd} 80 MHz first channel.

That is, assuming that a value of a BSS operation bandwidth of WLAN transmission is 80 MHz, the first device performs frequency hopping to the 3^{rd} 80 MHz first channel, obtains the 3^{rd} first transmission time of the narrowband signal on the 3^{rd} 80 MHz first channel, and compares the 3^{rd} first transmission time with the first threshold, to determine whether to perform LBT for the 3^{rd} 80 MHz first channel. It should be understood that a first transmission time for each first channel having a bandwidth of 20 MHz, 40 MHz, 160 MHz, or 320 MHz is similar to that shown in FIG. 8B.

FIG. 9A and FIG. 9B are diagrams of still another first transmission time according to an embodiment of this application. The first device corresponding to the first transmission time shown in FIG. 9A and FIG. 9B has a narrowband communication capability and a WLAN communication capability, and the first device can sense a first BSS operation bandwidth of a BSS in which the first device is located.

It should be understood that frequency bands shown in FIG. 9A and FIG. 9B are described by using UNII-3 as an example. The first transmission time includes a transmission time of the narrowband signal on some or all of the first channels corresponding to the first BSS operation bandwidth in the N first channels. The first duty cycle includes a duty cycle corresponding to transmission of the narrowband signal on some or all of the first channels corresponding to the first BSS operation bandwidth in the N first channels.

A first BSS operation bandwidth shown in FIG. 9A is 40 MHz, and a 1^{st} 40 MHz first channel is a channel on which narrowband transmission and WLAN transmission overlap. A bandwidth of another first channel may be the same as the first BSS operation bandwidth, as shown in FIG. 8A. That is, all first channels have a same bandwidth value.

For example, all first channels for transmitting the narrowband signal have a bandwidth the same as the first BSS operation bandwidth in the UNII-3, and the first transmission time corresponding to an n^{th} first channel is compared with the first threshold, to determine whether to enable the LBT for the n^{th} first channel.

A first BSS operation bandwidth shown in FIG. 9B is 80 MHz, and a 1^{st} 80 MHz first channel is a channel on which narrowband transmission and WLAN transmission overlap. A bandwidth of another first channel may be different from the first BSS operation bandwidth. As shown in FIG. 9B, a bandwidth of a 2^{nd} first channel and a bandwidth of a 3^{rd} first channel may be 20 MHz.

For example, a first transmission time on some of the first channels corresponding to the first BSS operation bandwidth is compared with the first threshold, to determine whether to enable LBT on the some of the first channel. As shown in FIG. 9B, a 1^{st} 80 MHz first channel is compared with the first threshold, to determine whether to enable the LBT on the 1^{st} 80 MHz first channel. For a determining manner of a 2^{nd} first channel and a 3^{rd} first channel in FIG. 9B, a determining manner corresponding to a form of a related first transmission time in FIG. 7A and FIG. 7B, or FIG. 8A and FIG. 8B may be used. This is not limited in this embodiment of this application.

It should be understood that the second duty cycle indicates a proportion of the second transmission time in a transmission period, and the first duty cycle indicates a proportion of the first transmission time in the transmission period. Therefore, the first duty cycle may be determined based on the first transmission time and the transmission period, and the second duty cycle may be determined based on the second transmission time and the transmission period, which are not shown in FIG. 9A and FIG. 9B.

It should be understood that, assuming that probabilities of narrowband signal frequency hopping across different channels are approximately the same, the first transmission time in FIG. 9A and FIG. 9B may alternatively be determined based on the transmission time for transmitting the narrowband signal by the first device, the first BSS operation bandwidth, and the total bandwidth for transmitting the narrowband signal.

FIG. 10A and FIG. 10B are diagrams of yet another first transmission time according to an embodiment of this application. The first device corresponding to the first transmission time shown in FIG. 10A and FIG. 10B has a narrowband communication capability and a WLAN communication capability, and the first device has a capability of supporting BSS operation bandwidths corresponding to different BSSs on different first channels within a given frequency band.

It should be understood that frequency bands shown in FIG. 10A and FIG. 10B are described by using UNII-3 as an example. An n^{th} first transmission time corresponding to transmission of the narrowband signal on the n^{th} first channel is determined based on an n^{th} second BSS operation bandwidth. An n^{th} first duty cycle corresponding to transmission of the narrowband signal on the n^{th} first channel is determined based on the n^{th} second BSS operation bandwidth.

The first device shown in FIG. 10A perceives that a 1^{st} second BSS operation bandwidth is 40 MHz, and may correspond to a 1^{st} first channel formed by a 1^{st} 20 MHz and a 2^{nd} 20 MHz. The 1^{st} first channel corresponds to a 1^{st} first transmission time. A 2^{nd} second BSS operation bandwidth is 40 MHz, and may correspond to a 2^{nd} first channel formed by a 3^{rd} 20 MHz and a 4^{th} 20 MHz. The 2^{nd} first channel corresponds to a 2^{nd} first transmission time. A 3^{rd} second BSS operation bandwidth is 40 MHz, and may correspond to a 3^{rd} first channel formed by a 5^{th} 20 MHz and a 6^{th} 20 MHz. The 3^{rd} first channel corresponds to a 3^{rd} first transmission time.

For example, it is determined, by comparing an n^{th} first transmission time with a first threshold, whether to enable LBT for an n^{th} first channel.

The first device shown in FIG. 10B perceives that a 1^{st} second BSS operation bandwidth is 80 MHz, and may correspond to a 1^{st} first channel formed by a 1^{st} 20 MHz, a 2^{nd} 20 MHz, a 3^{rd} 20 MHz, and a 4^{th} 20 MHz. The 1^{st} first channel correspond to a 1^{st} first transmission time. A 2^{nd} second BSS operation bandwidth is 40 MHz, and may correspond to a 2^{nd} first channel formed by a 5^{th} 20 MHz and a 6^{th} 20 MHz. The 2^{nd} first channel corresponds to a 2^{nd} first transmission time.

For example, the 1^{st} first transmission time shown in FIG. 10B may be an averaging result of transmission times corresponding to four 20 MHz channels, and the 2^{nd} first transmission time may be an averaging result of transmission times corresponding to two 20 MHz channels. It is determined, by comparing an n^{th} first transmission time with a first threshold, whether to enable LBT for an n^{th} first channel.

It should be understood that the second duty cycle indicates a proportion of the second transmission time in a transmission period, and the first duty cycle indicates a proportion of the first transmission time in the transmission period. Therefore, the first duty cycle may be determined based on the first transmission time and the transmission period, and the second duty cycle may be determined based on the second transmission time and the transmission period, which are not shown in FIG. 10A and FIG. 10B.

It should be understood that, assuming that probabilities of narrowband signal frequency hopping across different channels are approximately the same, the n^{th} first transmission time in FIG. 10A and FIG. 10B may alternatively be determined based on the transmission time for transmitting the narrowband signal by the first device, the n^{th} second BSS operation bandwidth, and the total bandwidth for transmitting the narrowband signal.

Optionally, if the first device perceives that no WLAN transmission exists on a first channel of the N first channels, the first device does not enable LBT for the first channel, but directly transmits a narrowband signal.

Optionally, when there is no WLAN signal on a channel, the first device directly does not perform the LBT.

In other words, when there is a WLAN signal on a channel, the first device determines, by comparing the first transmission time with the first threshold, whether to perform the LBT. Alternatively, when there is a WLAN signal on a channel, the first device determines, by comparing the first duty cycle with the second threshold, whether to perform the LBT.

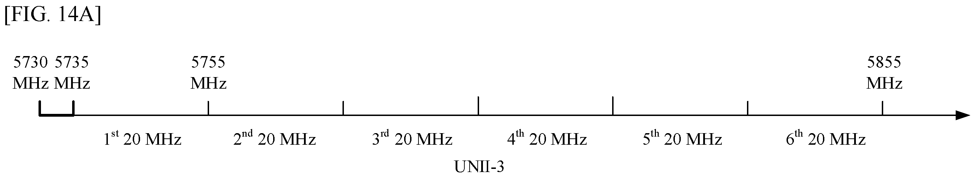

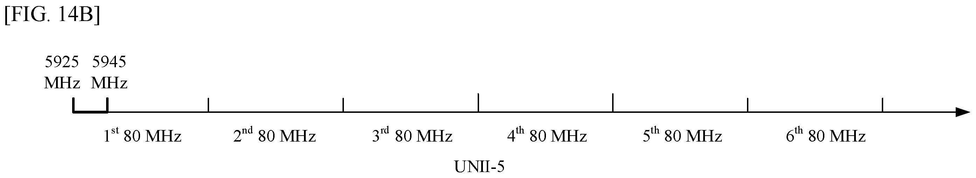

FIG. 14A and FIG. 14B are diagrams of another UNII-3 frequency band and another UNII-5 frequency band according to an embodiment of this application. It should be understood that FIG. 14A and FIG. 14B are specific examples of whether there is a WLAN signal on a channel.

A range of the UNII-3 frequency band is from 5.725 GHz to 5.850 GHz, with a total spectrum of 125 MHz. As shown in FIG. 14A, a range of a frequency band of a channel on which there is no WLAN signal may be from 5730 MHz to 5735 MHz. It should be understood that the UNII-3 frequency band shown in FIG. 14A includes six 20 MHz channels, and a range of a frequency band of a 6^{th} 20 MHz channel may be from 5825 MHz to 5855 MHz. It should be understood that, although an upper limit of the range of the UNII-3 frequency band in this application is 5.850 GHz, an upper limit of the UNII-3 frequency band may be extended to 5855 MHz shown in FIG. 14A.

For example, in the UNII-3 frequency band, there is no WLAN signal on a 5 MHz channel corresponding to 5730 MHz to 5735 MHz, and the first device may not perform the LBT on the 5 MHz channel, but directly transmit a narrowband signal.

For example, in the UNII-3 frequency band, there is a WLAN signal on the 5 MHz channel corresponding to 5730 MHz to 5735 MHz, and the first device determines, by comparing the first transmission time with the first threshold, whether to perform the LBT. Alternatively, in the UNII-3 frequency band, there is a WLAN signal on the 5 MHz channel corresponding to 5730 MHz to 5735 MHz, and the first device determines, by comparing the first duty cycle with the second threshold, whether to perform the LBT.

A range of the UNII-5 frequency band is from 5.925 GHz to 6.425 GHz, with a total spectrum of 500 MHz, and may include twenty-five 20 MHz channels. As shown in FIG. 14B, a range of a frequency band of a channel on which there is no WLAN signal may be from 5925 MHz to 5945 MHz.

For example, in the UNII-5 frequency band, there is no WLAN signal on a 20 MHz channel corresponding to 5925 MHz to 5945 MHz, and the first device may not perform the LBT on the 20 MHz channel, but directly transmit a narrowband signal.

For example, in the UNII-5 frequency band, there is a WLAN signal on the 20 MHz channel corresponding to 5925 MHz to 5945 MHz, and the first device determines, by comparing the first transmission time with the first threshold, whether to perform the LBT. Alternatively, in the UNII-5 frequency band, there is a WLAN signal on the 20 MHz channel corresponding to 5925 MHz to 5945 MHz, and the first device determines, by comparing the first duty cycle with the second threshold, whether to perform the LBT.

The communication method provided in embodiments of this application is described in detail above with reference to FIG. 3 to FIG. 10B and FIG. 14A to FIG. 17. It may be understood that, to implement the foregoing functions, a corresponding hardware structure and/or a corresponding software module for performing the functions are/is included.

A person skilled in the art should be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for the particular applications, but it should not be considered that the implementation goes beyond the scope of this application.

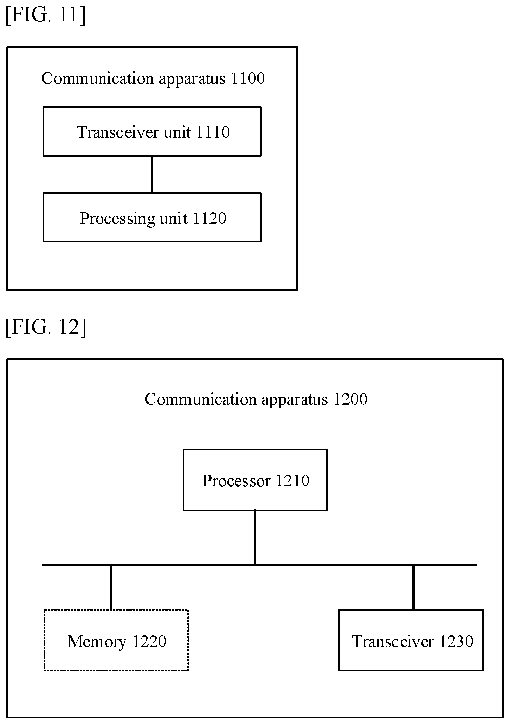

The following describes in detail communication apparatuses provided in embodiments of this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, some content is not described again.

FIG. 11 is a diagram of a communication apparatus 1100 according to an embodiment of this application. The apparatus 1100 may include a processing unit 1120, and the processing unit 1120 is configured to process data. The apparatus 1100 may further include a transceiver unit 1110. The transceiver unit 1110 may implement a corresponding communication function. The transceiver unit 1110 may also be referred to as a communication interface, a communication unit, or an interface unit. It should be understood that unless otherwise specified, if operations such as sending and receiving in this application do not contradict an actual function or internal logic of the operations in related descriptions, the operations may be more generally understood as operations such as outputting and inputting, instead of operations of sending and receiving directly performed by a radio frequency circuit and an antenna.

Optionally, the apparatus 1100 may further include a storage unit. The storage unit may be configured to store instructions and/or data. The processing unit 1120 may read the instructions and/or the data in the storage unit, to enable the apparatus to implement the foregoing method embodiments.

The apparatus 1100 may be configured to perform an action performed by the first device in the foregoing method embodiments. In this case, the apparatus 1100 may be a communication device or a component that can be configured in the communication device. The transceiver unit 1110 is configured to perform a sending/receiving-related operation on a communication device side in the foregoing method embodiments. The processing unit 1120 is configured to perform a processing-related operation of the first device in the foregoing method embodiments.

In a design, the apparatus 1100 is configured to perform an action performed by the first device in communication in the method embodiment shown in FIG. 3 or FIG. 5. An execution body may be a chip, a chip system, or a processor that supports the first device in implementing the corresponding method, or may be a logical module or software that can implement all or some of functions of the first device.

Specifically, the transceiver unit 1110 is configured to obtain a first transmission time. The first transmission time is related to a transmission time of at least one of N first channels, the N first channels are used to transmit a narrowband signal through frequency hopping, and N is a positive integer greater than or equal to 2.

The processing unit 1120 is configured to: enable listen-before-talk LBT if the first transmission time is greater than or equal to a first threshold; or skip enabling the LBT if the first transmission time is less than the first threshold.

For parts that are not described in detail, refer to the foregoing method embodiments.

In a design, the communication apparatus 1100 is configured to perform an action performed by a receive end in communication in the method embodiment shown in FIG. 3 or FIG. 5. An execution body may be a chip, a chip system, or a processor that supports the receive end in implementing the corresponding method, or may be a logical module or software that can implement all or some of functions of the receive end.

Specifically, the transceiver unit 1110 is configured to obtain a first duty cycle. The first duty cycle indicates a proportion of a first transmission time in a transmission period, the first transmission time is related to a transmission time of at least one of N first channels, the N first channels are used to transmit a narrowband signal through frequency hopping, and N is a positive integer greater than or equal to 2. The processing unit 1120 is configured to: enable LBT if the first duty cycle is greater than or equal to a second threshold; or skip enabling the LBT if the first duty cycle is less than the second threshold.

For parts that are not described in detail, refer to the foregoing method embodiments.

It should be understood that a specific process in which the units perform the foregoing corresponding steps is described in detail in the foregoing method embodiments, and for brevity, details are not described herein.

The processing unit 1120 in the foregoing embodiments may be implemented by at least one processor or a processor-related circuit. The transceiver unit 1110 may be implemented by a transceiver or a transceiver-related circuit. The storage unit may be implemented by at least one memory.

FIG. 12 is a diagram of a structure of a communication apparatus 1200 according to an embodiment of this application.

As shown in FIG. 12, an embodiment of this application further provides a communication apparatus 1200. The apparatus 1200 includes a processor 1212. Optionally, the apparatus further includes a memory 1220. The processor 1212 is coupled to the memory 1220. The memory 1220 is configured to store a computer program or instructions and/or data. The processor 1212 is configured to execute the computer program or the instructions and/or the data stored in the memory 1220, so that the methods in the foregoing method embodiments are performed.

Optionally, the apparatus 1200 includes one or more processors 1212.

Optionally, as shown in FIG. 12, the apparatus 1200 may further include the memory 1220.

Optionally, the apparatus 1200 includes one or more memories 1220.

Optionally, the memory 1220 and the processor 1212 may be integrated together or separately disposed.

Optionally, as shown in FIG. 12, the apparatus 1200 may further include a transceiver 1230. The transceiver 1230 is configured to receive and/or send a signal. For example, the processor 1212 is configured to control the transceiver 1230 to receive and/or send the signal.

In a solution, the apparatus 1200 is configured to implement operations performed by the first device or the second device in the foregoing method embodiments.

For example, the processor 1212 is configured to implement a processing-related operation performed by the first device or the second device in the foregoing method embodiments, and the transceiver 1230 is configured to implement a sending/receiving-related operation performed by the first device or the second device in the foregoing method embodiments.

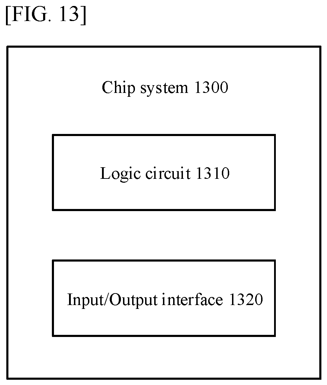

FIG. 13 is a diagram of a chip system 1300 according to an embodiment of this application. As shown in FIG. 13, the chip system 1300 (or may be referred to as a processing system) includes a logic circuit 1310 and an input/output interface (input/output interface) 1320. The logic circuit is configured to be coupled to the input/output interface, and transmit a data parameter through the input/output interface, to perform the methods in the foregoing method embodiments. A device in which the chip system 1300 is installed may implement the methods and functions in embodiments of this application. For example, the logic circuit 1310 may be a processing circuit in the chip system 1300, to control the device in which the chip system 1300 is installed, or may be coupled to a storage unit, and invoke instructions in the storage unit, so that the device can implement the methods and functions in embodiments of this application. The input/output interface 1320 may be an input/output circuit in the chip system 1300, to output information processed by the chip system 1300, or input to-be-processed data or signaling information to the chip system 1300 for processing.

In a solution, the chip system 1300 is configured to implement operations performed by the communication apparatus (for example, the first device or the second device) in the foregoing method embodiments.

For example, the logic circuit 1310 is configured to implement a processing-related operation performed by the first device or the second device in the foregoing method embodiments, and the input/output interface 1320 is configured to implement a sending/receiving-related operation performed by the first device or the second device in the foregoing method embodiments.

An embodiment of this application further provides a communication system. The communication system includes one or more first devices and one or more second devices that implement the communication methods in the foregoing method embodiments.

An embodiment of this application further provides a computer-readable storage medium. The computer-readable storage medium stores computer instructions for implementing the methods performed by the communication apparatus (for example, the first device or the second device) in the foregoing method embodiments.

For example, when a computer program is executed by a computer, the computer is enabled to implement the methods performed by the communication apparatus (for example, the first device or the second device) in the foregoing method embodiments.

An embodiment of this application further provides a computer program product including instructions. When the instructions are executed by a computer, the computer is enabled to implement the methods performed by the communication apparatus (for example, the first device or the second device) in the foregoing method embodiments.

For explanations and beneficial effects of related content in any one of the apparatuses provided above, refer to the corresponding method embodiments provided above. Details are not described herein again.

It should be understood that, the processor mentioned in embodiments of this application may be a central processing unit (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining a first transmission time, wherein the first transmission time is related to a transmission time of at least one of N first channels, the N first channels are used to transmit a narrowband signal through frequency hopping, and N is a positive integer greater than or equal to 2; and
enabling listen-before-talk LBT if the first transmission time is greater than or equal to a first threshold; or skipping enabling the LBT if the first transmission time is less than the first threshold.

2. The method according to claim 1, wherein the method further comprises:
obtaining N second transmission times corresponding to the N first channels, wherein an n^{th} second transmission time comprises a transmission time of the narrowband signal on an n^{th} first channel, the first transmission time is an average value of the N second transmission times, 1≤n≤N, and n is a positive integer.

3. The method according to claim 2, wherein enabling the listen-before-talk LBT if the first transmission time is greater than or equal to the first threshold comprises: enabling the LBT for the N first channels if the first transmission time is greater than or equal to the first threshold.

4. The method according to claim 1, wherein the first transmission time comprises a transmission time of the narrowband signal on an n^{th} first channel when a first device performs frequency hopping to the n^{th} first channel, 1≤n≤N, and n is a positive integer.

5. The method according to claim 4, wherein enabling the listen-before-talk LBT if the first transmission time is greater than or equal to the first threshold comprises: enabling the LBT for the n^{th} first channel if the first transmission time is greater than or equal to the first threshold.

6. The method according to any one of claims 2 to 5, wherein a value of a bandwidth corresponding to each of the first channels is one of 20 MHz, 40 MHz, 80 MHz, 160 MHz, 240 MHz, 320 MHz, 480 MHz, or 640 MHz.

7. The method according to claim 1, wherein the method further comprises:
obtaining a first BSS operation bandwidth corresponding to a basic service set BSS in which a first device is located, wherein the first transmission time comprises a transmission time of the narrowband signal on some or all of the first channels corresponding to the first BSS operation bandwidth in the N first channels.

8. The method according to claim 7, wherein enabling the listen-before-talk LBT if the first transmission time is greater than or equal to the first threshold comprises: enabling the LBT for the some or all of the first channels if the first transmission time is greater than or equal to the first threshold.

9. The method according to claim 1, wherein the method further comprises:
obtaining an n^{th} second BSS operation bandwidth corresponding to an n^{th} first channel, wherein 1≤n≤N, and n is a positive integer; and
obtaining the first transmission time comprises:
obtaining, based on the n^{th} second BSS operation bandwidth, an n^{th} first transmission time corresponding to transmission of the narrowband signal on the n^{th} first channel.

10. The method according to claim 9, wherein enabling the listen-before-talk LBT if the first transmission time is greater than or equal to the first threshold comprises: enabling the LBT for the n^{th} first channel if the n^{th} first transmission time is greater than or equal to the first threshold.

11. The method according to any one of claims 1 to 10, wherein the first transmission time is related to a transmission time for transmitting the narrowband signal by the first device, a bandwidth of the first channel, and a total bandwidth for transmitting the narrowband signal.

12. The method according to any one of claims 1 to 11, wherein the method further comprises:
obtaining a first duty cycle based on the first transmission time, wherein the first duty cycle indicates a proportion of the first transmission time in a transmission period; and
enabling the listen-before-talk LBT if the first transmission time is greater than or equal to the first threshold; or skipping enabling the LBT if the first transmission time is less than the first threshold comprises:
enabling the LBT if the first duty cycle is greater than or equal to a second threshold; or skipping enabling the LBT if the first duty cycle is less than the second threshold.

13. The method according to claim 12, wherein a type of the transmission period comprises any one of the following:
a ranging round, a sensing round, a total interval applied to a ranging scenario, a total interval applied to a sensing scenario, a duration of a ranging block, a duration of a sensing block, or a duration of a hyper block, wherein
the total interval applied to the ranging scenario comprises the ranging round and a non-ranging round, and the total interval applied to the sensing scenario comprises the sensing round and the non-sensing round;
the duration of the ranging block comprises a ranging round of a first user and a non-ranging round of the first user, and the duration of the sensing block comprises a sensing round of the first user and a non-sensing round of the first user; and
the duration of the hyper block comprises a duration of one or more ranging blocks, or the duration of the hyper block comprises a duration of one or more sensing blocks.

14. The method according to claim 13, wherein transmission periods of different types correspond to first thresholds of different scales, or the transmission periods of different types correspond to second thresholds of different scales.

15. The method according to claim 14, wherein a first transmission period corresponds to a first threshold of a first scale, a second transmission period corresponds to a first threshold of a second scale, and if a duration of the first transmission period is less than a duration of the second transmission period, the first threshold of the first scale is greater than the first threshold of the second scale.

16. The method according to claim 14, wherein a first transmission period corresponds to a second threshold of a third scale, a second transmission period corresponds to a second threshold of a fourth scale, and if a duration of the first transmission period is less than a duration of the second transmission period, the second threshold of the third scale is greater than the second threshold of the fourth scale.

17. A communication method, comprising:
obtaining a first duty cycle, wherein the first duty cycle indicates a proportion of a first transmission time in a transmission period, the first transmission time is related to a transmission time of at least one of N first channels, the N first channels are used to transmit a narrowband signal through frequency hopping, and N is a positive integer greater than or equal to 2; and
enabling LBT if the first duty cycle is greater than or equal to a second threshold; or skipping enabling the LBT if the first duty cycle is less than the second threshold.

18. The method according to claim 17, wherein the method further comprises:
obtaining N second duty cycles corresponding to the N first channels, wherein an n^{th} second duty cycle indicates a proportion of an n^{th} second transmission time in the transmission period, the first duty cycle is an average value of the N second duty cycles, 1≤n≤N, and n is a positive integer.

19. The method according to claim 18, wherein
enabling the LBT if the first duty cycle is greater than or equal to the second threshold comprises:
enabling the LBT for the N first channels if the first duty cycle is greater than or equal to the second threshold.

20. The method according to claim 17, wherein the first duty cycle comprises a duty cycle corresponding to transmission of the narrowband signal on the n^{th} first channel when the first device performs frequency hopping to the n^{th} first channel, 1≤n≤N, and n is a positive integer.

21. The method according to claim 20, wherein
enabling the LBT if the first duty cycle is greater than or equal to the second threshold comprises:
enabling the LBT for the n^{th} first channel if the first duty cycle is greater than or equal to the second threshold.

22. The method according to any one of claims 17 to 21, wherein a value of a bandwidth corresponding to each of the first channels is one of 20 MHz, 40 MHz, 80 MHz, 160 MHz, 240 MHz, 320 MHz, 480 MHz, or 640 MHz.

23. The method according to claim 17, wherein the method further comprises:
obtaining a first BSS operation bandwidth corresponding to a basic service set BSS in which a first device is located, wherein the first duty cycle comprises a duty cycle corresponding to transmission of the narrowband signal on some or all of the first channels corresponding to the first BSS operation bandwidth in the N first channels.

24. The method according to claim 23, wherein
enabling the LBT if the first duty cycle is greater than or equal to the second threshold comprises:
enabling the LBT for the some or all of the first channels if the first duty cycle is greater than or equal to the second threshold.

25. The method according to claim 17, wherein the method further comprises:
obtaining an n^{th} second BSS operation bandwidth corresponding to an n^{th} first channel, wherein 1≤n≤N, and n is a positive integer; and
obtaining the first duty cycle comprises:
obtaining, based on the n^{th} second BSS operation bandwidth, an n^{th} first duty cycle corresponding to a transmission time for transmitting the narrowband signal on the n^{th} first channel.

26. The method according to claim 25, wherein
enabling the LBT if the first duty cycle is greater than or equal to the second threshold comprises:
enabling the LBT for the n^{th} first channel if the n^{th} first duty cycle is greater than or equal to the second threshold.

27. The method according to any one of claims 17 to 26, wherein the first transmission time is related to a transmission time for transmitting the narrowband signal by the first device, a bandwidth of the first channel, and a total bandwidth for transmitting the narrowband signal.

28. The method according to any one of claims 17 to 27, wherein the method further comprises:
obtaining the first transmission time based on the first duty cycle; and
enabling the listen-before-talk LBT if the first duty cycle is greater than or equal to the second threshold; or skipping enabling the LBT if the first duty cycle is less than the second threshold comprises:
enabling the LBT if the first transmission time is greater than or equal to a first threshold; or skipping enabling the LBT if the first transmission time is less than the first threshold.

29. The method according to any one of claims 17 to 28, wherein a type of the transmission period comprises any one of the following:
a ranging round, a sensing round, a total interval applied to a ranging scenario, a total interval applied to a sensing scenario, a duration of a ranging block, a duration of a sensing block, or a duration of a hyper block, wherein
the total interval applied to the ranging scenario comprises the ranging round and a non-ranging round, and the total interval applied to the sensing scenario comprises the sensing round and the non-sensing round;
the duration of the ranging block comprises a ranging round of a first user and a non-ranging round of the first user, and the duration of the sensing block comprises a sensing round of the first user and a non-sensing round of the first user; and
the duration of the hyper block comprises a duration of one or more ranging blocks, or the duration of the hyper block comprises a duration of one or more sensing blocks.

30. The method according to claim 29, wherein transmission periods of different types correspond to first thresholds of different scales, or the transmission periods of different types correspond to second thresholds of different scales.

31. The method according to claim 30, wherein a first transmission period corresponds to a first threshold of a first scale, a second transmission period corresponds to a first threshold of a second scale, and if a duration of the first transmission period is less than a duration of the second transmission period, the first threshold of the first scale is greater than the first threshold of the second scale.

32. The method according to claim 30, wherein a first transmission period corresponds to a second threshold of a third scale, a second transmission period corresponds to a second threshold of a fourth scale, and if a duration of the first transmission period is less than a duration of the second transmission period, the second threshold of the third scale is greater than the second threshold of the fourth scale.

33. A communication apparatus, comprising a unit for performing the method according to any one of claims 1 to 16, or comprising a unit for performing the method according to any one of claims 17 to 32.

34. A communication apparatus, comprising a processor, wherein the processor is coupled to a memory, and the processor is configured to execute a computer program or instructions stored in the memory, so that the communication apparatus performs the method according to any one of claims 1 to 16, or the communication apparatus performs the method according to any one of claims 17 to 32.

35. A computer-readable storage medium, wherein the computer-readable storage medium stores a computer program or instructions, and when the computer program or the instructions are run on a computer, the computer is enabled to perform the method according to any one of claims 1 to 16, or the computer is enabled to perform the method according to any one of claims 17 to 32.
